# EUROPÄISCHE PATENTANMELDUNG

(11) **EP 4 257 348 A1**
(43) Veröffentlichungstag der Anmeldung: **11.10.2023**
(21) Anmeldenummer: 23159893.9
(22) Anmeldetag: 03.03.2023
(51) Int. Cl.: B30B 15/34, B30B 15/02, B29C 43/52, D21J 3/00, D21J 7/00

(54) **HEISSPRESS-WERKZEUGHÄLFTE, HEISSPRESSEINRICHTUNG MIT EINEM HEISSPRESSWERKZEUG UND VERFAHREN ZUM HEISSPRESSEN VON VORFORMLINGEN AUS EINEM FASERHALTIGEN MATERIAL**

(30) Priorität: 05.04.2022 DE 102022108094
(71) Anmelder: KIEFEL GmbH, 83395 Freilassing (DE)
(72) Erfinder: Neuhofer, Heinz, 83395 Freilassing (DE); Rehrl, Josef, 83317 Teisendorf (DE); Auer, Thomas, 83416 Saaldorf-Surheim (DE); Rehrl, Hubert, 83317 Teisendorf (DE); Köppl, Raphael, 83483 Bischofswiesen (DE)
(74) Vertreter: DTS Patent- und Rechtsanwälte Schnekenbühl und Partner mbB

(57) **Zusammenfassung**

Es werden eine Werkzeugkomponente (640), eine Heißpresseinrichtung (610) und ein Verfahren zum Heißpressen von Vorformlingen aus einem faserhaltigen Material beschrieben, wobei die Heißpresseinrichtung (610) eine erste Werkzeugkomponente (640) mit einem ersten Werkzeugkörper (642) und mindestens einer ersten Formeinrichtung (670) und eine zweite Werkzeugkomponente (690) mit einem zweiten Werkzeugkörper (692) und mindestens einer zweiten Formeinrichtung (694) aufweist. Das Verfahren umfasst das Bereitstellen mindestens eines Vorformlings aus faserhaltigem Material, das Erwärmen des ersten Werkzeugkörpers (640) und der ersten Formeinrichtung (670) über Temperiermittel, das Aufsetzen eines Vorformlings auf erste Anlageflächen (676) der ersten Formeinrichtung (670), das Bewegen der zweiten Werkzeugkomponente (690) relativ zur ersten Werkzeugkomponente (640), wobei der Vorformling in Anlage mit zweiten Anlageflächen (696) der zweiten Formeinrichtung (694) kommt, und das Verpressen der ersten Werkzeugkomponente (640) und der zweiten Werkzeugkomponente (690) bis die ersten Anlageflächen (676) und die zweiten Anlageflächen (696) eine geschlossene Kavität ausbilden, wobei durch den über die Temperiermittel erzeugten Wärmeeintrag und den durch Verpressen der ersten Werkzeugkomponente (640) und der zweiten Werkzeugkomponente (690) erzeugten Druck verdampfende Restfeuchtigkeit aus dem Vorformling über erste Öffnungen (678), einen ersten Kanal (646) und einen ersten Anschluss abführt wird, und wobei über eine zweite Öffnung ein Gas oder ein Gasgemisch während des Ausbringens der verdampfenden Restfeuchtigkeit eingebracht werden.

## Beschreibung

### Technisches Gebiet

Es werden eine Werkzeugkomponente für eine Heißpresseinrichtung, eine Heißpresseinrichtung und ein Verfahren zum Heißpressen von Vorformlingen aus einem faserhaltigen Material beschrieben.

Faserhaltige Materialen werden vermehrt eingesetzt, um bspw. Verpackungen für Lebensmittel (bspw. Schalen, Kapseln, Boxen, etc.) und Konsumgüter (bspw. elektronische Geräte etc.) sowie Getränkebehälter herzustellen. Die faserhaltigen Materialien weisen dabei in der Regel Naturfasern auf, die bspw. aus nachwachsenden Rohstoffen oder Altpapier gewonnen werden. Die Naturfasern werden in einer sogenannten Pulpe mit Wasser und ggf. weiteren Zusätzen, wie z.B. Stärke, vermischt. Zusätze können zudem Auswirkungen auf die Farbe, die Barriereeigenschaften und mechanische Eigenschaften haben. Diese Pulpe kann einen Anteil von Naturfasern von bspw. 0,5 bis 10 Gew.-% aufweisen. Der Anteil an Naturfasern variiert in Abhängigkeit des Verfahrens, welches zur Herstellung von Verpackungen etc. angewandt wird, und der Produkteigenschaften des herzustellenden Produkts.

### Hintergrund

Üblicherweise erfolgt die Herstellung von faserhaltigen Produkten aus einer Pulpe in mehreren Arbeitsschritten. Zunächst wird die Pulpe in einem Pulpe-Vorrat bereitgestellt und ein Ansaugkörper mit einem Ansaugwerkzeug, dessen Geometrie im Wesentlichen dem herzustellenden Produkt entspricht, wird zumindest teilweise in die Pulpe getaucht. Während des Eintauchens erfolgt ein Ansaugen über Öffnungen im Ansaugwerkzeug, das mit einer entsprechenden Einrichtung in Verbindung steht, wobei sich Fasern aus der Pulpe an dem Ansaugwerkzeug ansammeln. Diese Fasern werden über das Ansaugwerkzeug in ein Vorpresswerkzeug gebracht, wobei ein Vorformling erzeugt wird. Während dieses Vorpressvorgangs werden die Fasern zum Vorformling verpresst und der Wassergehalt des Vorformlings reduziert.

In einem darauffolgenden Arbeitsschritt wird der Vorformling in einer Heißpresse in der Regel zum fertigen Produkt verpresst. Hierbei wird der Vorformling in ein Heißpresswerkzeug eingebracht, welches eine untere Werkzeughälfte und eine obere Werkzeughälfte aufweist, welche beheizt werden. In dem Heißpresswerkzeug wird der Vorformling in einer Kavität unter Wärmeeintrag verpresst, wobei durch den Druck und die Wärme Restfeuchte ausgebracht wird, so dass ein Vorformling mit einem Restfeuchtegehalt von ca. 60 Gew.-% nach dem Heißpressen nur noch einen Restfeuchtegehalt von bspw. 5 Gew.-% aufweist. Der beim Heißpressen entstehende Wasserdampf wird während des Heißpressens über Öffnungen in den Kavitäten und Kanäle im Heißpresswerkzeug abgesaugt. Hierzu ist eine Absaugeinrichtung vorgesehen, die ein relatives Vakuum erzeugt. Die Absaugung erfolgt dabei üblicherweise über die untere Werkzeughälfte. Hierzu ist eine Vakuumpumpe oder eine andere entsprechend wirkende Einrichtung vorgesehen und mit den Öffnungen in den Kavitäten fluidisch verbunden.

Ein Heißpresswerkzeug und ein Herstellungsverfahren mit dem vorstehend beschriebenen Heißpressverfahren sind bspw. aus DE 10 2019 127 562 A1 bekannt.

Beim Heißpressen ist es entscheidend, die Vorformlinge, welche einen relativ hohen Wassergehalt aufweisen, ausreichend stark zu erwärmen und ausreichend lange zu verpressen, um die gewünschte Restfeuchte im fertigen Produkt zu erzielen und die Fasern zu verpressen. Hierzu werden in der Regel sehr lange Taktzeiten je Heißpressvorgang gefahren, um sicherzustellen, dass alle in einem Heißpresswerkzeug aufgenommenen Vorformlinge den geforderten maximalen Restfeuchtegehalt haben.

Ein zu langes Verpressen geht dabei jedoch zu Lasten der Taktzeit, die dann länger ist, wie eigentlich erforderlich. Wird die Taktzeit zu kurz gewählt, können nicht alle Vorformlinge in einem Heißpresswerkzeug ausreichend erwärmt und verpresst werden, so dass ein Teil der heißgepressten Vorformlinge als Ausschuss verworfen werden muss, weil diese Vorformlinge zu feucht und/oder beschädigt sind. Mögliche Beschädigungen treten beispielsweise auf, weil zu feuchte Vorformlinge beim Öffnen des Heißpresswerkzeugs an dem oberen Heißpresswerkzeug "kleben" bleiben und/oder zumindest partiell reißen.

Es wurde festgestellt, dass insbesondere, wenn ein Heißpresswerkzeug mehrere Kavitäten aufweist, in welche Vorformlinge eingebracht werden, die eingangs über Temperiermittel erwärmten Kavitäten sowie die die Kavitäten zumindest zum Teil ausbildende Werkzeugkomponente während des Heißpressens unterschiedlich starken Temperaturschwankungen unterliegen. So hat bspw. der hohe Wassergehalt der Vorformlinge einen maßgeblichen Einfluss auf die Temperatur von Anlageflächen der Kavitäten. Da die Vorformlinge vor dem Heißpressen unterschiedliche Wassergehalte aufweisen können, kann es folglich auch zu einem unterschiedlich starken "Kühlen" der Kavitäten und des Heißpresswerkzeugs kommen. Hierbei wurde zudem festgestellt, dass insbesondere die Oberflächentemperatur der Anlageflächen der Kavitäten je Kavität stark variieren, und zwar abhängig von der Position der Kavitäten im Heißpresswerkzeug.

Weiterhin wurde festgestellt, dass, wenn die Schließgeschwindigkeit des Heißpresswerkzeugs, d.h. die Geschwindigkeit mit welcher die beiden Werkzeugkomponenten des Heißpresswerkzeugs relativ zueinander verlagert werden, nicht an die Abgabe von Wasser aus dem Vorformling angepasst ist, weniger Wasser entstehen kann, wie (lokal) verdampfen kann, so dass die abgezogene Energie nicht ausreicht, um die Oberflächentemperatur auf Siedetemperatur abzukühlen (Oberflächentemperatur > Siedetemperatur) und somit Zykluszeit "verschenkt" wird.

Darüber hinaus kann die Schließgeschwindigkeit der Wasserentstehung innerhalb der Kavitäten nicht angepasst sein, so dass mehr Wasser frei wird, wie (lokal) in einem vorgegebenen Zeitfenster verdampfen kann, wobei die von den Kavitäten abgezogene Wärmeenergie die Oberflächentemperatur der Anlageflächen in den Kavitäten unter die charakteristische Siedetemperatur des Fasermaterials bei vorherrschendem Druck abkühlen lässt (Oberflächentemperatur < Siedetemperatur). Somit kann die Taktzeit/der Zyklus nicht effektiv genutzt werden, da die Oberfläche der Kavitäten zu stark abkühlt. Folglich müsste die Taktzeit erhöht werden.

Weiterhin kann die Dampfentstehung aufgrund zu hoher Schließgeschwindigkeiten zu schnell geschehen und lokale "Dampfpolster" erzeugen. Hierbei kann aufgrund einer sphärischen Dampfausbreitung zu allen Seiten in geschlossenen lokalen Räumen innerhalb der Kavitäten, verbunden mit einem Druckanstieg, ein darin aufgenommener Vorformling zerreißen. Weiter kann der Dampf aufgrund "Verblockung" durch die vorhandenen Öffnungen nicht schnell genug entweichen und ein Druckanstieg kann zudem zu höherer Siedetemperatur des Wassers bzw. der aus der Pulpe im Vorformling mitgeführten Flüssigkeit führen, wodurch das fertige Produkt "nässer" wirkt, da der Oberfläche der Kavität nicht ausgeglichen Energie entzogen werden kann. "Verblockung" bezeichnet ein Verstopfen bzw. Verschließen der Öffnungen und/oder der Kanäle, wenn bspw. mehr Wasserdampf entsteht, als abgeführt werden kann.

### Aufgabe

Bei der Herstellung von Produkten aus einem Fasermaterial besteht daher ein enormes Verbesserungspotential, insbesondere im Hinblick auf den Verfahrensschritt des Heißpressens und der dafür erforderlichen Werkzeuge. Mit den bekannten Mitteln und Verfahren ist es bisher nicht möglich, die vorstehend genannten Probleme im Hinblick auf eine ausreichende Erwärmung der Vorformlinge bei entsprechend geringer Taktzeit durchzuführen, wobei der Ausschuss reduziert ist.

Es besteht daher die Aufgabe darin, ein Heißpresswerkzeug und ein Verfahren anzugeben, welche heißgepresste Vorformlinge (fertige Produkte) aus einem Fasermaterial bereitstellen, die einen vorgebbaren Restfeuchtegehalt nicht überschreiten, wobei kein Ausschuss erzeugt wird oder zumindest der Ausschuss gegenüber bekannten Verfahren und Heißpresswerkzeugen reduziert ist. Zudem soll die Taktzeit derart optimiert werden, dass keine Ressourcen im Hinblick auf Zeit, Energie und Stoffumsatz verschwendet werden.

### Lösung

Die vorstehend genannte Aufgabe wird durch eine Werkzeugkomponente für eine Heißpresseinrichtung gelöst, aufweisend einen ersten Werkzeugkörper, wobei der erste Werkzeugkörper an mindestens einer Seite mindestens eine erste Formeinrichtung aufweist, welche erste Anlageflächen für einen aufzunehmenden Vorformling aufweist, wobei der erste Werkzeugkörper aus einem thermisch leitenden Material besteht und erste Temperiermittel aufweist, die dazu ausgebildet sind, den ersten Werkzeugkörper und die mindestens eine erste Formeinrichtung zu temperieren, wobei die mindestens eine erste Formeinrichtung an den ersten Anlageflächen für einen aufzunehmenden Vorformling erste Öffnungen aufweist, die in mindestens einen ersten Kanal im ersten Werkzeugkörper münden, wobei der mindestens eine erste Kanal von den ersten Öffnungen in mindestens einen ersten Anschluss mündet,
wobei mindestens eine zweite Öffnung vorgesehen ist, die eine fluidische Verbindung zu den ersten Öffnungen der mindestens einen ersten Formeinrichtung getrennt von dem mindestens einen ersten Anschluss bereitstellt.

Allgemein wurde festgestellt, dass die Oberflächentemperatur von Kavitäten, die zwischen den ersten Anlageflächen und zweiten Anlageflächen mindestens einer zweiten komplementär ausgebildeten Formeinrichtung gebildet sind, und insbesondere die Oberflächentemperatur von ersten und zweiten Anlagenflächen unabhängig vom Temperaturniveau zu Beginn eines Zyklus aufgrund des durch die Schließkraft entstehenden überschüssigen Wassers oder Flüssigkeit bzw. Fluids aus einer Pulpe aus einem Vorformling stark einbricht. Damit ist eine Heißpresseinrichtung mit einem Heißpresswerkzeug, welches eine erste Werkzeugkomponente (z.B. untere Werkzeughälfte) und eine zweite Werkzeugkomponente (z.B. obere Werkzeughälfte) aufweist, für die Zeit, in welcher die Oberflächentemperatur der Anlageflächen mindestens einer Kavität unter ein für den Heißpressprozess kritisches Niveau fällt, nicht effektiv verwendbar, weil überschüssiges Wasser nicht verdampfen kann. Dabei können die erste Werkzeugkomponente und die zweite Werkzeugkomponente so ausgebildet sein, dass die Kavitäten während des Heißpressens dicht schließen. Damit kann Energie beim Heißpressen eingespart werden, weil es zu keinem Austreten von bspw. Wasserdampf und dadurch zu einem Abkühlen von Kavitäten kommt. Hierzu können eine erste Formeinrichtung und eine korrespondierende zweite Formeinrichtung entsprechend ausgebildet sein und während eines Heißpressvorgangs entsprechend stark miteinander verpresst werden. In weiteren Ausführungen kann eine lokale Undichtigkeit bewusst vorgesehen sein, um damit eine zweite Öffnung zwischen einer ersten Formeinrichtung und einer zweiten Formeinrichtung in einer Kavität zu erzeugen, welche dadurch bspw. einen "Nebenluftstrom" beim Absaugen von in der Kavität entstehenden Wasserdampf bereitstellt.

Eine Kavität wird beim Heißpresswerkzeug zwischen ersten Anlagenflächen einer ersten Formeinrichtung in einer ersten Werkzeugkomponente und korrespondieren zweiten Anlageflächen einer zweiten Formeinrichtung in einer zweiten Werkzeugkomponente gebildet.

Beim Verpressen einer ersten Werkzeugkomponente und einer zweiten Werkzeugkomponente eines Heißpresswerkzeugs trifft entstehendes überschüssiges Wasser oder Fluid aus der Pulpe aus dem Rohprodukt (Vorformling) auf die Oberfläche/Anlageflächen der Kavität und verdampft bei ausreichend hoher Oberflächentemperatur, was ebenfalls zu einem kurzzeitigen Einbrechen des Temperaturniveaus führen kann. Im weiteren Verlauf speist die unmittelbar umgebende Kapazität des Materials der Werkzeugkomponente die oberflächennahen Bereiche und bringt somit die Anlageflächen sehr schnell wieder auf ein mittleres, der erforderlichen Gesamtleistung entsprechendes Niveau. Der erste Werkzeugkörper und die Formeinrichtungen können hierzu bspw. aus einem Metall oder einer Metalllegierung bestehen und weisen dabei sehr gute Wärmeleiteigenschaften auf. Bspw. bestehen der erste Werkzeugkörper und die mindestens eine erste Formeinrichtung aus Aluminium, wobei auch andere Metalle und Metalllegierungen geeignet sind. Bei der Auswahl des Materials sind unter anderem die zu erreichenden Temperaturen, die Speicherfähigkeit (Kapazität) des Materials und die Zusammensetzung der Pulpe sowie deren Bestandteile zu berücksichtigen. Der erste Werkzeugkörper und die mindestens eine Formeinrichtung können bspw. auch eine Beschichtung aufweisen, die sowohl dazu dienen kann, die Oberflächen vor einer Beschädigung und/oder Wechselwirkung mit der Pulpe/Wasser und/oder mit einer der Bestandteile der Werkzeugeinrichtung zu schützen.

Durch eine Beschichtung können bspw. auch Sensorelemente an der Oberfläche des ersten Werkzeugkörpers und/oder den ersten Anlageflächen der mindestens einen ersten Formeinrichtung geschützt werden. Die Eigenschaften der Beschichtung können zudem an Anforderungen des Werkzeugs angepasst werden.

Im Weiteren kann die mindestens eine Formeinrichtung integraler Bestandteil des ersten Werkzeugkörpers sein. So kann bspw. die mindestens eine Formeinrichtung als Erhebung oder Vertiefung im ersten Werkzeugkörper ausgebildet sein und dabei ein Negativ oder Positiv der zu fertigenden Produkte bilden.

In weiteren Ausführungen kann die mindestens eine erste Formeinrichtung austauschbar mit dem ersten Werkzeugkörper verbunden werden. Hierzu weisen sowohl der erste Werkzeugkörper als auch die mindestens eine erste Formeinrichtung korrespondierende Befestigungsmittel auf. Bspw. kann über Schrauben eine Verbindung mindestens einer ersten Formeinrichtung mit dem ersten Werkzeugkörper über die Befestigungsmittel des ersten Werkzeugkörpers und der mindestens einen ersten Formeinrichtung erfolgen. Befestigungsmittel können bspw. Öffnungen mit oder ohne Gewinde, Bolzen, Haken, Schienen etc. sein.

Klassischerweise weisen ein Heißpresswerkzeug und eine zugehörige Werkzeugkomponente mehrere Formeinrichtungen bzw. Kavitäten auf, so dass in einem Heißpressvorgang entsprechend mehrere Produkte gleichzeitig gefertigt werden können. Bei mehreren Kavitäten bzw. Formeinrichtungen treten die vorstehend genannten Probleme verstärkt in den Vordergrund, so dass es bspw. aufgrund von unterschiedlich feuchten Vorformlingen und lagebedingter Temperaturschwankungen an den Oberflächen der Kavitäten bzw. Formeinrichtungen sowie den daraus sich ergebenden unterschiedlichen Drücken und Temperaturen zu einer unterschiedlichen Dampfentwicklung und deswegen auch zu einem "Verblocken" kommen kann. Ferner können mehrere erste Kanäle in der ersten Werkzeugkomponente vorgesehen sein, die unterschiedlich lange Strömungspfade bis zu einer Absaugeinrichtung aufweisen, so dass es hierüber zu einer zusätzlichen Beeinflussung der Zustände in den Kavitäten und den ersten Kanälen kommt.

Die angegebene Werkzeugkomponente bietet durch die mindestens eine zweite Öffnung, die mit den ersten Öffnungen der mindestens einen ersten Formeinrichtung getrennt von dem mindestens einen ersten Anschluss fluidisch verbunden ist, insbesondere bei mehreren ersten Formeinrichtungen bzw. Kavitäten, eine Lösung für die vorstehenden Probleme, so dass es zu keinem "Verblocken" in den Kavitäten kommt und über den Druckausgleich bei allen Kavitäten die Siedetemperaturen für das Fluid in den unterschiedlichen Kavitäten angeglichen werden. Somit kommt es nicht aufgrund großer Druckunterschiede zu unterschiedlich hohen Siedetemperaturen in den Kavitäten, so dass hierüber der lokal hervorgerufene Temperaturunterschied in den Kavitäten, der aus der Position der Kavitäten am Werkzeugkörper und in Abhängigkeit der Nachbarschaft der Kavitäten herrührt, nicht verstärkt wird und somit einen geringeren Einfluss auf das Heißpressen hat. Somit bietet die hierin vorgeschlagene Lösung die Möglichkeit, die Taktzeit für einen Heißpressvorgang festzulegen, die für alle Vorformlinge, die gleichzeitig gefertigt werden, ausreichend lang ist, so dass keine Taktzeit verschwendet wird.

Über die ersten Öffnungen kann während eines Heißpressvorgangs entstehendes Fluid (gasförmig oder flüssig) aus der Pulpe über den mindestens einen ersten Kanal abgesaugt oder anderweitig abgeführt werden. Bei dem Fluid handelt es sich in der Regel um Wasser, das an den heißen Oberflächen der Kavitäten verdampft. Somit wird gewöhnlich Wasserdampf aus den Kavitäten abgeführt. Hierzu kann eine entsprechende Einrichtung (z.B. Vakuumpumpe) mit dem ersten Anschluss verbunden werden. Das Abführen des Fluids, wobei der Ausdruck Fluid sowohl gasförmige als auch flüssige Stoffe umfasst und darüber hinaus für Wasser sowie eine wässrige Lösung aus der Pulpe steht, kann bspw. bei einem Druck unterhalb des Umgebungsdrucks erfolgen. Bspw. kann das hierüber bereitgestellte Vakuum einen absoluten Druck von 0,2 bis 0,9 bar aufweisen. Die mindestens eine zweite Öffnung stellt beim Abführen von bspw. Wasserdampf über die ersten Öffnungen eine fluidische Verbindung mit der Umgebung, einem Gas- oder Gasgemischspeicher, oder einer Vorrichtung (Pumpe, Radialverdichter, etc.) zur Bereitstellung von Gas oder Gasgemisch bereit. Somit wird nicht nur das gasförmige und/oder flüssige Fluid aus den Kavitäten abgesaugt, sondern auch Gas oder ein Gasgemisch, bspw. Umgebungsluft, mit angesaugt. Dies hat zur Folge, dass sich der Druck im mindestens einen ersten Kanal sowie an allen Kavitäten dem Umgebungsdruck oder dem Gas- bzw. Gasgemischdruck, der je nach Art Bereitstellung vom Umgebungsdruck abweichen kann (bspw. aufgrund einer Bereitstellung durch einen Verdichter etc.), angleicht.

Die fluidische Verbindung zwischen einer im Verbindungsbereich zwischen einer ersten Formeinrichtung und einer zweiten Formeinrichtung vorgesehenen zweiten Öffnung, die bspw. durch einen Schlitz gebildet ist, und den ersten Öffnungen liegt gemäß der hier gewählten Definition auch dann vor, wenn eine "geschlossene" Verbindung erst im geschlossenen Zustand einer ersten Werkzeugkomponente und einer zweiten Werkzeugkomponente vorliegt. Damit ist gemeint, dass eine Verbindung bei einer Werkzeugkomponente auch über die Oberfläche der ersten Formeinrichtung entlang der Anlageflächen besteht. Dabei kann die mindestens eine zweite Öffnung durch eine Vertiefung in einem Anlagebereich der ersten Formeinrichtung und/oder einer komplementär dazu ausgebildeten zweiten Formeinrichtung gebildet sein, so dass die mindestens eine zweite Öffnung somit keine geschlossene Umrandung erfordert.

Das Absaugen von Fluid über die ersten Öffnungen in den ersten Anlageflächen bzw. aus der mindestens einen Kavität kann aufgrund des zusätzlichen Ansaugens von Gas, Gasgemisch oder Umgebungsluft mit verschiedenen Drücken erfolgen. Bspw. kann aufgrund des Mitansaugens von Gas, Gasgemisch oder Umgebungsluft das Absaugen über den mindestens einen ersten Anschluss mit einem leichten Unterdruck erfolgen (< 1 bar).

Insgesamt wird durch die Bereitstellung eines Nebenstroms an Gas oder Gasgemisch, wobei Gasgemisch auch Umgebungsluft umfasst, erreicht, dass es zu keinem "Verblocken" kommt, weil bspw. mehr "Dampfvolumen" aus den Kavitäten abgezogen werden kann als bei einem konventionell vorliegenden Unterdruck.

So kann bspw. bei Volumenströmen nahe Umgebungsdruck (ca. 1 bar) mehr "Dampfvolumen" abgezogen werden als bei Unterdruck (bspw. 0,5 bar). Wenn der Nebenstrom an Gas oder Gasgemisch mit einem höheren Druck (> 1 bar) bereitgestellt wird, ergibt sich ein noch höheres Potential zum Abführen bzw. Absaugen von bspw. Wasserdampf aus den Kavitäten. Hierfür entscheidend ist unter anderem die Sättigung des Nebenstroms an Wasser. Je geringer die Sättigung ist, desto mehr Wasser kann aus den Kavitäten aufgenommen und damit abgeführt bzw. abgesaugt werden. Darüber hinaus wird die Fähigkeit pro Zeiteinheit möglichst viel an den heißen Anlageflächen der Kavitäten verdampfendes Wasser abzuführen erhöht, wenn die Menge an Gas oder Gasgemisch über den Nebenstrom bzw. der Druck, mit welchem das Gas oder Gasgemisch bereitgestellt wird, erhöht werden.

Die Verdampfungsenthalpie des Fluids aus der Pulpe (insb. Wasser) ist dabei im Wesentlichen unabhängig vom Temperaturniveau in den Kavitäten und um ein Vielfaches höher als die Energie des Erwärmens bis auf Verdampfungstemperatur. Folglich ist es von Vorteil, mit möglichst viel wirksamen Druck den entstehenden Wasserdampf abzufördern.

Insgesamt wird durch die hierin beschriebene Werkzeugkomponente ein Angleichen der Siedetemperaturen in den Kavitäten eines Heißpresswerkzeugs bei einem Druckausgleich in den Abführkanälen (mindestens einer erster Kanal) erreicht, wobei das abgeführte Volumen an Fluid aus Vorformlingen wesentlich erhöht ist, ohne dass die Zykluszeit/Taktzeit darunter leidet. Die hier vorgestellte Lösung bietet mit einem verhältnismäßig geringen Aufwand eine deutliche Verbesserung beim Heißpressen und damit der finalen Fertigung von Produkten aus Fasermaterialien.

Der erste Anschluss des ersten Kanals kann unterschiedlich ausgeführt sein. So kann der erste Anschluss lediglich eine Verbindung zu einem weiteren Kanal außerhalb des ersten Werkzeugkörpers aufweisen. In weiteren Ausführungen kann der erste Anschluss Verbindungselemente zum Koppeln mit korrespondierenden Verbindungselementen aufweisen. In weiteren Ausführungen kann der mindestens eine erste Anschluss auch ein Ventil aufweisen, welches zum Absaugen und zur Bereitstellung eines Vakuums regelbar ist.

Die mindestens eine zweite Öffnung kann im ersten Werkzeugkörper und/oder an der mindestens einen ersten Formeinrichtung vorgesehen sein. Wie vorstehend bereits ausgeführt, kann die mindestens eine zweite Öffnung als Vertiefung in einem Anlagebereich einer ersten Formeinrichtung ausgebildet sein, welche im verbundenen Zustand mit einer zweiten Formeinrichtung eine fluidische Verbindung zwischen dieser Öffnung und den ersten Öffnungen der zugehörigen ersten Anlageflächen bereitstellt. Die Ausgestalt solcher zweiten Öffnungen umfasst verhältnismäßig kleine kreisrunde, ovale oder schlitzartige Öffnungen. Die Öffnungsweite solcher zweiten Öffnungen ist dabei, wie auch für andere zweite Öffnungen, derart zu bestimmen, dass es über den bereitgestellten Nebenstrom an Gas oder Gasgemisch innerhalb der Kavitäten nicht zu einem Zusammenbruch der dort vorherrschenden Zustände kommt. Da die Zustände von der Dimension der zu fertigenden Produkte und somit der Kavitäten, dem Feuchtigkeitsgehalt von Vorformlingen und der Taktzeit sowie der daran beteiligten Medien abhängen, kann eine Begrenzung der Zustände, insbesondere Temperatur und Druck, die wiederum für die Dimensionierung der zweiten Öffnung dienen, nicht pauschal mit einer Öffnungsweite der zweiten Öffnungen bezeichnet werden. Es ergibt sich jedoch, dass die Öffnungsweite der mindestens einen zweiten Öffnung hiervon abhängt und entsprechend zu bestimmen ist. Die mindestens eine zweite Öffnung kann weiterhin bspw. auch im ersten Werkzeugkörper vorgesehen und mit dem mindestens einen ersten Kanal und/oder den ersten Öffnungen fluidisch verbunden sein.

In weiteren Ausführungen kann der erste Werkzeugkörper mindestens einen zweiten Kanal aufweisen, der mit dem mindestens einen ersten Kanal und der mindestens einen zweiten Öffnung fluidisch verbunden ist. In noch weiteren Ausführungen kann der mindestens eine zweite Kanal über mindestens einen zweiten Anschluss in dem ersten Werkzeugkörper mit der Umgebung, einem Speicher für Gas oder Gasgemisch oder einer Einrichtung zur Bereitstellung eines Nebenstroms an Gas oder Gasgemisch (z.B. Verdichter) fluidisch verbunden sein.

Der mindestens eine zweite Anschluss kann wie ein erster Anschluss unterschiedlich ausgeführt und bspw. als Öffnung ausgebildet sein. Es können am mindestens einen zweiten Anschluss auch Verbindungselemente vorgesehen sein, die ein Koppeln mit einem Ventil ermöglichen. In weiteren Ausführungen können Verbindungselemente selbst einen zweiten Anschluss bilden.

Darüber hinaus kann in weiteren Ausführungen die mindestens eine zweite Öffnung mit der Umgebung, einem Gasspeicher oder einer Einrichtung zur Bereitstellung von Gas oder einem Gasgemisch verbunden sein.

In weiteren Ausführungen kann die Werkzeugkomponente mindestens ein Regelelement zur Einstellung der Öffnungsweite der mindestens einen zweiten Öffnung aufweisen. Regelelemente dienen dabei zur Regelung der Menge an zugeführtem Nebenstrom. Je nach Ausführung können Regelelemente bspw. als Ventile oder bspw. als Blenden ausgeführt sein.

In weiteren Ausführungen können die mindestens eine zweite Öffnung und/oder der mindestens eine zweite Kanal mindestens ein Ventil aufweisen, über welches eine Steuerung der Menge an zugeführtem Nebenstrom an Gas oder Gasgemisch möglich ist. Somit lässt sich eine Anpassung an verschiedene gemessene oder ermittelte Zustände in den Kavitäten und/oder Kanälen im Werkzeugkörper, verschiedene Feuchtigkeitsgehalte der Vorformlinge und/oder verschiedene Kavitäten für entsprechende Produkte einstellen. Auch ein zweiter Anschluss kann mit einem Ventil verbindbar sein oder ein Ventil aufweisen.

Hierüber kann die Menge an angesaugtem Gas oder Gasgemisch (z.B. Umgebungsluft) geregelt werden. Somit kann wesentlich Einfluss darauf genommen werden, wie viel Fluid (bspw. Wasserdampf) abgeführt wird. Insbesondere können bei einer kontinuierlichen Überwachung eines Heißpressprozesses permanent die Menge an abgeführtem Fluid, die Temperaturen in den Kavitäten und damit die Siedetemperaturen und die Drücke in den Kanälen bzw. Kavitäten der Werkzeugkomponente geregelt und an vorgegebene Optima im Hinblick auf die Takt- oder Zykluszeit angepasst werden.

In noch weiteren Ausführungen kann ein Regelelement bspw. als Blende ausgeführt sein, die verschiebbar am ersten Werkzeugkörper angeordnet ist und selbst mindestens eine Öffnung aufweist, die in einer Neutralstellung kongruent zur mindestens einen zweiten Öffnung liegt. Wird die Blende verschoben oder anderweitig verlagert (z.B. verdrehen, kippen, etc.), kommt es zu einer Änderung der Öffnungsweite der mindestens einen zweiten Öffnung. Bspw. können bei Ausführungen mit mehreren, insbesondere parallelen zweiten Kanälen, wobei die dazugehörigen zweiten Öffnungen an einer Seite des ersten Werkzeugkörpers angeordnet sind, eine Blende mit entsprechenden Öffnungen verschiebbar angeordnet sein. Durch die Verschiebung der Blende kann dann gleichzeitig eine Änderung der Öffnungsweite aller zweiten Öffnungen gleichzeitig erfolgen. Dies kann bspw. erfolgen, um die Öffnungsweite der zweiten Öffnungen an neue Produkte bzw. Kavitäten oder an Veränderungen an Zuständen in den Kavitäten und/oder Eigenschaften von Vorformlingen anzupassen. Es kann das Verschieben einer Blende manuell durch einen Operator durchgeführt werden, wobei hierzu bspw. Arretiermittel (z.B. Schrauben) gelöst und nach der Neueinstellung wieder arretiert werden, oder motorisch erfolgen. Eine motorische Ansteuerung kann bspw. nach Maßgabe von gemessenen, erfassten und/oder berechneten Zuständen und/oder Parametern erfolgen.

In weiteren Ausführungen kann die Heißpresskomponente mehrere zweite Kanäle aufweisen, die innerhalb des ersten Werkzeugkörpers verlaufen. Dadurch kann bspw. in einem kurzen Zeitraum eine relativ große Menge an Fluid gegenüber einer konventionellen Ausführung eines Werkzeugkörpers mit lediglich einem ersten Kanal und Ausführungen mit nur einem zweiten Kanal abgeführt werden. Ferner wird ein "Verblocken" weiter reduziert und auch bei einer starken Dampfentstehung sichergestellt, dass die Kanäle im Werkzeugkörper ausreichend Volumen für variable Volumina an Fluid bzw. Wasserdampf aufweisen. Weiterhin wird damit auch sichergestellt, dass die Siedetemperaturen in den Kavitäten und die Drücke in den Kanälen sich angleichen bzw. auf das gleiche Niveau gelangen.

In weiteren Ausführungen können die zweiten Kanäle parallel zueinander verlaufen. Weiterhin können die parallel zueinander verlaufenden zweiten Kanäle miteinander über Verbindungsleitungen, die bspw. quer zu den zweiten Kanälen verlaufen, verbunden sein. Hierüber wird sichergestellt, dass angesaugtes Gas oder Gasgemisch (z.B. Umgebungsluft) in ausreichender Menge zu einzelnen Kavitäten der Werkzeugkomponente gelangen kann, um Fluid (bspw. Wasserdampf) abführen zu können, ohne dass es kurzzeitig zu einem Druckanstieg in den Kanälen kommt. Bspw. kann beim Heißpressen kurzfristig sehr viel Wasserdampf entstehen. Die Kanäle im Werkzeugkörper sind in der Regel so ausgebildet, dass diese relativ geringe Durchmesser (bspw. im Bereich von 1 bis 5 mm) aufweisen, so dass pro Zeiteinheit nur eine beschränkte Menge an Wasserdampf abgeführt werden kann. Die Durchmesser der zweiten Kanäle können aus Gründen der Wärmespeicherfähigkeit nicht beliebig groß gewählt werden, weil ansonsten ein zu starkes Abkühlen der zweiten Kanäle durch angesaugte Umgebungsluft, die bei üblichen Raumtemperaturen bspw. 20 °C aufweist, oder durch ein Gas/Gasgemisch mit einer hierzu stark abweichenden Temperatur auftreten würde, was in Folge zu einem Kühlen des Werkzeugkörpers und damit der ersten Formeinrichtungen führen würde, wobei der Werkzeugkörper und die ersten Formeinrichtungen bspw. in einem Temperaturbereich von 150 bis 250 °C betrieben werden. Je stärker die Kanäle miteinander verbunden sind, desto mehr kann auch bei kurzfristigen Spitzen an Wasserdampf sichergestellt werden, dass eine ausreichende Menge an Wasserdampf abgeführt wird, und es zu keinen lokalen Druckspitzen in den Kavitäten oder in den Kanälen kommt. Somit wird auch ein lokaler Anstieg der Siedetemperatur in einzelnen Kavitäten vermieden.

In weiteren Ausführungen können die im Werkzeugkörper verlaufenden Kanäle zum Abführen von austretendem Fluid (z.B. Wasserdampf) aus Vorformlingen einen sich zum ersten Anschluss vergrößernden Durchmesser haben. Gerade bei Ausführungen mit mehreren Kavitäten verlaufen im Werkzeugkörper in der Regel mehrere Kanäle, die in einem gemeinsamen ersten Kanal enden, der einen ersten Anschluss aufweist. Der gemeinsame erste Kanal muss pro Zeiteinheit deutlich mehr Volumen an verdampfendem Fluid abführen, wie einzelne Kanäle von den Kavitäten, so dass entsprechend größere Durchmesser erforderlich sind. Die Ausgestaltung der Durchmesser kann dabei nach Maßgabe der Ausbildung des Werkzeugkörpers und der Anzahl und Gestalt der Kavitäten bzw. Formeinrichtungen erfolgen.

Die vorstehend genannte Aufgabe wird auch durch eine Heißpresseinrichtung mit mindestens einer ersten Werkzeugkomponente gemäß einer der vorstehend beschriebenen Ausführungen und mindestens einer zweiten Werkzeugkomponente gelöst, wobei die zweite Werkzeugkomponente einen zweiten Werkzeugkörper aus einem thermisch leitenden Material und der zweite Werkzeugkörper an mindestens einer Seite mindestens eine zweite Formeinrichtung aufweist, die komplementär zu der mindestens einen ersten Formeinrichtung ausgebildet ist und zweite Anlageflächen für einen aufzunehmenden Vorformling aufweist, so dass zwischen den ersten Anlageflächen der mindestens einen ersten Formeinrichtung der ersten Werkzeugkomponente und den zweiten Anlageflächen der mindestens einen zweiten Formeinrichtung der zweiten Werkzeugkomponente jeweils eine Kavität für einen aufzunehmenden Vorformling gebildet ist, wenn die erste Werkzeugkomponente und die zweite Werkzeugkomponente zum Heißpressen von Vorformlingen gegeneinander verpresst sind.

Die erste Werkzeugkomponente und die zweite Werkzeugkomponente sind so ausgebildet, dass diese korrespondierende Formeinrichtungen aufweisen, die im geschlossenen Zustand Kavitäten für die Vorformlinge zum Verpressen ausbilden. Ferner können die erste Werkzeugkomponente und die zweite Werkzeugkomponente im Wesentlichen ähnlich ausgebildet sein, wobei die erste Werkzeugkomponente und die zweite Werkzeugkomponente bspw. aus den gleichen Materialien bestehen und eine gleiche Beschichtung aufweisen können.

Eine derart ausgebildete Heißpresseinrichtung ermöglicht das Formen von Produkten ausgehend von Vorformlingen in einem Heißpressprozess, wobei die Taktzeiten/Zykluszeiten kurz gehalten sind, und die Vorformlinge/Produkte im vorgegebenen Rahmen gefertigt werden, d.h. eine maximale Restfeuchte aufweisen und es zu keinem "Verblocken" bei der Herstellung kommt. Dies wird, wie vorstehend beschrieben, dadurch erreicht, dass während des Heißpressens beim Absaugen von Fluid (z.B. Wasserdampf) zusätzlich ein Gas, ein Gasgemisch oder Umgebungsluft über mindestens eine zweite Öffnung der ersten Werkzeugkomponente zugeführt wird. Damit erfolgt in den Kanälen des ersten Werkzeugkörpers ein Druckausgleich und die Siedetemperaturen in verschiedenen Kavitäten gleichen sich an. Darüber hinaus kann auch ein größeres Volumen an Fluid (z.B. Wasserdampf) abgeführt werden.

Sowohl die mindestens eine erste Formeinrichtung als auch die mindestens eine zweite Formeinrichtung können wie der erste Werkzeugkörper und der zweite Werkzeugkörper aus einem Material mit sehr guten Wärmeleiteigenschaften bestehen und zudem entsprechend widerstandsfähig gegenüber einer Beschädigung durch die Fasern und die Pulpe sowie den austretenden Wasserdampf sein. Als Material kommen insbesondere Metalle und Metalllegierungen in Betracht. Bspw. können die mindestens eine erste Formeinrichtung und die mindestens eine zweite Formeinrichtung aus Aluminium bestehen.

In weiteren Ausführungen kann die zweite Werkzeugkomponente zweite Temperiermittel aufweisen, die dazu ausgebildet sind, den zweiten Werkzeugkörper und die mindestens eine zweite Formeinrichtung zu temperieren. Über die zweiten Temperiermittel erfolgt zusätzlich zur Erwärmung der ersten Werkzeugkomponente eine Erwärmung der zweiten Werkzeugkomponente. Dabei können die erste Werkzeugkomponente und die zweite Werkzeugkomponente im Wesentlichen auf die gleichen Temperaturen oder auf unterschiedliche Temperaturen gebracht werden. Damit kann eine gezielte Erwärmung von Vorformlingen innerhalb der Kavitäten erreicht werden. Zusätzlich kann hierüber bspw. dem Umstand Rechnung getragen werden, dass Vorformlinge zuerst auf die ersten Anlageflächen oder die zweiten Anlageflächen gebracht werden, was aufgrund der in den Vorformlingen enthaltenen Flüssigkeit (Wasser) zu einem Abkühlen dieser Anlageflächen führt. Bspw. können deshalb diese Anlageflächen stärker erwärmt werden, damit dann beim Heißpressen, wenn die erste Werkzeugkomponente und die zweite Werkzeugkomponente gegeneinander verpresst werden, eine im Wesentlichen gleich hohe Wärmeenergie zu beiden Seiten der Vorformlinge innerhalb der Kavitäten eingebracht werden kann.

Die ersten Temperiermittel und/oder die zweiten Temperiermittel können bspw. Heizpatronen umfassen, die in dem ersten Werkzeugkörper und/oder in dem zweiten Werkzeugkörper eingebracht sind. Die Ausbildung der Temperiermittel sowie die Anzahl an Heizpatronen richten sich nach der Ausbildung der Werkzeugkomponenten (Dimensionierung, Werkstoff/Material) und der Anzahl an Formeinrichtungen sowie deren Ausbildung (Größe, Volumen).

In weiteren Ausführungen können die ersten Temperiermittel und/oder die zweiten Temperiermittel auch andere Heizeinrichtungen aufweisen, die dazu ausgebildet sind den ersten Werkzeugkörper und/oder den zweiten Werkzeugkörper sowie die daran angeordneten Formeinrichtungen zu erwärmen.

Die Temperaturen der ersten Werkzeugkomponente und der zweiten Werkzeugkomponente können in weiteren Ausführungsformen bei einem Verfahren zum Regeln einer Heißpresseinrichtung mit einem Heißpresswerkzeug, aufweisend eine erste Werkzeugkomponente und eine zweite Werkzeugkomponente, während des Betriebs der Heißpresseinrichtung angepasst werden. Hierzu können bspw. während des Heißpressens erfasste Werte berücksichtigt werden. Es können darüber hinaus auch Werte herangezogen werden, die nach einem Heißpressvorgang und vor einem Heißpressvorgang erfasst worden sind. Weiterhin können auch vorab ermittelte oder bereitgestellte Werte und Daten der am Prozess beteiligten Komponenten und Stoffe hierzu herangezogen werden. Solche Werte können bspw. die Temperatur im Heißpresswerkzeug, insbesondere die Temperatur in den Kavitäten und dabei die Oberflächentemperatur der ersten Anlageflächen und/oder der zweiten Anlageflächen, der Druck innerhalb der Kavitäten, des mindestens einen ersten Kanals, des mindestens einen zweiten Kanals, des mindestens einen dritten Kanals und/oder des mindestens einen weiteren Kanals im zweiten Werkzeugkörper, das Gewicht von Vorformlingen/fertigen Produkten, die benötigte Energie zum Erwärmen des ersten Werkzeugkörpers und/oder des zweiten Werkzeugkörpers, die Temperatur des zugeführten Nebenstroms an Gas oder Gasgemisch (z.B. Umgebungsluft), die Temperatur des zugeführten Gas oder Gasgemischs bzw. des abgeführten Fluids aus dem Heißpresswerkzeug, die Zusammensetzung der Pulpe, die elektrische Leitfähigkeit von Vorformlingen/fertigen Produkten und/oder Referenzwerte sein, wobei sich die Referenzwerte beispielsweise auf die Kerntemperatur eines Werkzeugkörpers oder einer Temperatur unterhalb und in direkter Nähe zu den Anlageflächen in den Kavitäten beziehen. Die Referenzwerte werden dann dazu verwendet, einen Rückschluss auf die Oberflächentemperatur an den Anlagenflächen zu ziehen. So kann bspw. vorab ermittelt werden, welche Temperatur in einem Werkzeugkörper bei den Kavitäten an den Anlageflächen in einem Abstand von bspw. 5 mm unterhalb der Oberfläche vorherrscht. Zugleich wird über eine gesonderte Messeinrichtung die tatsächliche Oberflächentemperatur gemessen. Es können für mehrere Referenzwerte (Temperaturen im Werkzeugkörper) die korrespondierenden Oberflächentemperaturen an den Anlageflächen bestimmt werden. Dies bietet die Möglichkeit, während eines Heißpressvorgangs über Temperatursensoren, die unterhalb der Anlageflächen im Werkzeugkörper verbaut sind, einen Rückschluss auf die an den Oberflächen der Anlageflächen vorherrschenden Temperaturen zu ziehen. Hierbei können auch vorab entsprechende Referenzwerte ermittelt werden, wenn feuchte Vorformlinge auf die Anlageflächen aufgesetzt werden, um die Auswirkung auf die Oberflächentemperatur für die Referenzwerte zu berücksichtigen.

In weiteren Ausführungen kann die mindestens eine zweite Formeinrichtung an den zweiten Anlageflächen für einen aufzunehmenden Vorformling dritte Öffnungen aufweisen, die in mindestens einen dritten Kanal im zweiten Werkzeugkörper münden, wobei der mindestens eine dritte Kanal von den dritten Öffnungen in mindestens einen dritten Anschluss mündet. Dies bietet die Möglichkeit aus den Vorformlingen austretendes Fluid von beiden Seiten abzuführen. Hierzu kann in weiteren Ausführungen bspw. über den dritten Anschluss eine Saugeinrichtung angeschlossen werden. Es kann sich dabei um die gleiche Saugeinrichtung handeln, wie für den ersten Anschluss. Weiterhin kann analog zu dem mindestens einen zweiten Kanal im ersten Werkzeugkörper auch im zweiten Werkzeugkörper ein zusätzlicher Kanal vorgesehen sein, über den ein Gas, ein Gasgemisch oder Umgebungsluft zugeführt werden. Damit kann die Entstehung von "Luftpolstern" an den zweiten Anlageflächen verhindert werden, da austretendes Fluid stets abgeführt werden kann, und die Kavitäten zu beiden Seiten eines Vorformlings nicht verstopfen können.

An der Oberfläche der ersten Anlageflächen und/oder der zweiten Anlageflächen können Sensorelemente angeordnet sein, die zur Temperaturerfassung dienen. Es können insbesondere mehrere Sensorelemente an verschiedenen Positionen der Formeinrichtungen vorgesehen sein, um die lokal in den Kavitäten vorherrschenden Temperaturen zu erfassen und um dann damit in weiteren Ausführungen auch die Schließgeschwindigkeit, die Taktzeit, die Werkzeugerwärmung durch die Temperiermittel und die Stellung von Ventilen sowie ggf. die Leistung einer Absaugeinrichtung oder einer Zuführeinrichtung zur Zufuhr des Nebenstroms an Gas oder Gasgemisch zu steuern.

In weiteren Ausführungen können zusätzlich oder alternativ Sensorelemente zum Bestimmen der Oberflächentemperaturen der Anlageflächen in den Kavitäten unterhalb der Oberfläche angeordnet sein, die Temperaturreferenzwerte erfassen, die wiederum für entsprechende vorab ermittelte Oberflächentemperaturen an den Anlageflächen stehen. Dabei ist der Unterschied zwischen der tatsächlichen Oberflächentemperatur und einer Referenztemperatur unterhalb der Oberflächentemperatur im Werkzeugkörper umso kleiner, desto geringer der Abstand eines Sensorelements zu der Oberfläche ist. Bspw. können Sensorelemente zur Temperaturerfassung wenige Millimeter, bspw. im Bereich 1 bis 5 mm unterhalb der Oberfläche angeordnet sein. Je näher die Sensorelemente an der Oberfläche angeordnet sind, desto schneller können Temperaturveränderungen erfasst werden, was insbesondere dann wichtig ist, wenn beim Einbringen von feuchten Vorformlingen und beim Ausdrücken von Fluid/Wasser zu Beginn eines Heißpressvorgangs die Oberflächentemperatur der Anlageflächen sinkt. Bei größeren Abständen von Sensorelementen zu den Oberflächen der Anlageflächen würden Sensorelemente auch bei Werkzeugkörpern mit einer relativ hohen Wärmeleitfähigkeit träge sein und damit Temperaturveränderungen verhältnismäßig spät erfassen.

In weiteren Ausführungen kann mindestens eine zweite Öffnung in einem Kontaktbereich zwischen der mindestens einen ersten Formeinrichtung und der mindestens einen zweiten Formeinrichtung gebildet sein. Hierzu können die entsprechenden Anlagebereiche der mindestens einen ersten Formeinrichtung und der mindestens einen zweiten Formeinrichtung abschnittsweise bspw. Vertiefungen aufweisen, die im verbundenen Zustand einer ersten Formeinrichtung und einer zweiten Formeinrichtung zusammen eine Öffnung ausbilden, die zum Teil durch den die Öffnung umgebenden Bereich der mindestens einen ersten Formeinrichtung und zum Teil durch den die Öffnung umgebenden Bereich der mindestens einen zweiten Formeinrichtung gebildet wird. In noch weiteren Ausführungen kann dabei die mindestens eine zweite Öffnung auch durch eine Vertiefung im Verbindungsbereich der mindestens einen ersten Formeinrichtung oder im Verbindungsbereich der mindestens einen zweiten Formeinrichtung gebildet werden.

Weiterhin können zweite Öffnungen auch unterhalb eines Verbindungsbereichs von mindestens einer ersten Formeinrichtung und/oder mindestens einer zweiten Formeinrichtung angeordnet sein. Solche zweiten Öffnungen können sich auch um eine erste Formeinrichtung und/oder um eine zweite Formeinrichtung in regelmäßigen oder unregelmäßigen Abständen erstrecken.

Ferner wird die vorstehend genannte Aufgabe auch durch ein Verfahren zum Heißpressen von Vorformlingen aus einem faserhaltigen Material unter Verwendung einer Heißpresseinrichtung gemäß einer der vorstehenden Ausführungen gelöst, wobei eine erste Werkzeugkomponente einen ersten Werkzeugkörper und mindestens eine erste Formeinrichtung und eine zweite Werkzeugkomponente einen zweiten Werkzeugkörper und mindestens eine komplementär zu der mindestens einen ersten Formeinrichtung ausgebildete zweite Formeinrichtung aufweist, aufweisend die folgenden Schritte:
- Bereitstellen mindestens eines Vorformlings aus faserhaltigem Material,
- Erwärmen mindestens des ersten Werkzeugkörpers und der mindestens einen ersten Formeinrichtung über mindestens ein erstes Temperiermittel,
- Aufsetzen des mindestens einen Vorformlings auf die ersten Anlageflächen der mindestens einen ersten Formeinrichtung,
- Bewegen der zweiten Werkzeugkomponente relativ zur ersten Werkzeugkomponente, wobei der mindestens eine Vorformling in Anlage mit den zweiten Anlageflächen der mindestens einen zweiten Formeinrichtung kommt,
- Verpressen der ersten Werkzeugkomponente und der zweiten Werkzeugkomponente bis die ersten Anlageflächen und die zweiten Anlageflächen eine geschlossene Kavität ausbilden,
wobei durch den über die ersten Temperiermittel erzeugten Wärmeeintrag und den durch Verpressen der ersten Werkzeugkomponente und der zweiten Werkzeugkomponente erzeugten Druck verdampfende Restfeuchtigkeit aus dem mindestens einen ersten Vorformling über mindestens die ersten Öffnungen, den mindestens einen ersten Kanal und den ersten Anschluss von der Absaugeinrichtung abgeführt wird, wobei über mindestens eine zweite Öffnung, die eine fluidische Verbindung zu den ersten Öffnungen der mindestens einen ersten Formeinrichtung getrennt von dem mindestens einen ersten Anschluss bereitstellt, ein Einbringen eines Gas oder Gasgemischs mit einer gegenüber dem abgesaugten Wasserdampf unterschiedlichen Sättigung an Wasser während des Abführens der verdampfenden Restfeuchtigkeit erfolgt.

Über die mindestens eine zweite Öffnung, die mit den ersten Öffnungen mindestens einer ersten Formeinrichtung fluidisch verbunden ist, kann dabei ein Gas oder ein Gasgemisch (z.B. Umgebungsluft) von einer Absaugeinrichtung während des Abführens der verdampfenden Restfeuchtigkeit mit angesaugt werden. Alternativ kann über eine Zuführeinrichtung ein Nebenstrom an Gas oder Gasgemisch bereitgestellt werden, der den austretenden Wasserdampf "mitreißt". Nach Maßgabe der Menge des so eingebrachten Nebenstroms und dessen Sättigung an Wasser kann damit bei einer Angleichung der thermodynamischen Zustände in den Kavitäten stets ausreichend Wasserdampf abgeführt werden, ohne dass es zu einem Zusammenbruch der benötigten Umgebungsparameter für das Heißpressen kommt. Ein solcher Zusammenbruch könnte bspw. ein starkes Abfallen der Temperatur in den Kavitäten und/oder eine starke Druckveränderung in den Kavitäten sein. Das Verfahren ermöglicht damit eine Optimierung der Herstellungszeit bzw. Taktzeit/Zykluszeit für das Heißpressen von Vorformlingen aus einer relativ feuchten Pulpe, wobei ein Angleichen der Siedetemperaturen in einzelnen Kavitäten bei einem Druckausgleich in ersten Kanälen zu den Kavitäten bei gleichzeitig verbessertem Abführen von Wasserdampf erreicht wird, wie vorstehend mit Bezug auf die Werkzeugkomponenten eines Heißpresswerkzeugs für eine Heißpresseinrichtung beschrieben.

Es kann bei dem Verfahren zusätzlich auch eine Temperierung der zweiten Werkzeugkomponente und der mindestens einen zweiten Formeinrichtung erfolgen, wobei ein gleichmäßiges Erwärmen oder ein hierzu unterschiedliches Erwärmen über die ersten Anlageflächen und zweiten Anlageflächen der Kavitäten erfolgen kann.

In weiteren Ausführungen dient das Verfahren auch zur Regelung des Heißpressvorgangs, wobei die Taktzeit/Zykluszeit, der Druck, welcher über eine entsprechende Presse beim Verpressen der ersten Werkzeugkomponente und der zweiten Werkzeugkomponente erzeugt wird, und die Menge an abgeführtem Fluid, bspw. durch Regelung der Saugleistung, sowie ggf. die Stellung von Ventilen bei Kanälen zum Ansaugen von Gas oder eines Gasgemischs (bspw. Umgebungsluft), und die Schließgeschwindigkeit, d.h. die Geschwindigkeit, mit welcher die erste Werkzeugkomponente und die zweite Werkzeugkomponente relativ zueinander aufeinander zubewegt werden, über eine Steuerung geregelt werden. Die Steuerung steht hierzu mit Vorrichtungen in Verbindung, welche die vorstehenden Einstellungen und Parameter verändern bzw. beeinflussen können.

Durch Sensorelemente, die wie vorstehend beschrieben angeordnet sein können, können die Temperaturen in den Werkzeugkomponenten erfasst und bestimmt werden, wobei über die Steuerung nach Maßgabe dieser Temperaturen dann die Schließgeschwindigkeit, die Taktzeit, die Absaugleistung und/oder die Stellung von Ventilen geregelt werden können.

In weiteren Ausführungen kann das Gas oder Gasgemisch aus der Umgebung der mindestens einen Werkzeugkomponente oder von einer Zuführeinrichtung bereitgestellt werden, wobei durch die Zuführeinrichtung die Temperatur und/oder der Druck des über die mindestens eine zweite Öffnung zugeführten Gas oder Gasgemisches mindestens in der mindestens einen Kavität eingestellt werden.

Die Zuführeinrichtung kann bspw. einen Verdichter aufweisen, der Umgebungsluft, ein Gas (z.B. Sauerstoff) oder ein anderes Gasgemisch mit einem höheren Druck als Umgebungsdruck einbringt. Dabei kann es vorkommen, dass der Unterdruck, mit welchem über eine Absaugeinrichtung Wasserdampf aus den Kavitäten abgesaugt wird, nicht auf dem über die Absaugeinrichtung bereitgestellten Level bleibt. Wesentlich ist dabei, dass zumindest die Sogwirkung zum Abführen von Wasserdampf in einer definierten Richtung beibehalten oder ggf. durch den Überdruck des bereitgestellten Nebenstroms an Gas oder Gasgemisch unterstützt wird ("Ausblasen" des Wasserdampfs in Richtung Absaugeinrichtung).

In weiteren Ausführungen kann dabei die verdampfende Restfeuchtigkeit über den mindestens einen ersten Anschluss mit einem absoluten Druck von 0,1 bis 0,7 bar angesaugt, und/oder das Gas oder Gasgemisch über die mindestens eine zweite Öffnung mit einem absoluten Druck von 0,5 bis 5 bar, vorzugsweise im Bereich von 1 bis 1,5 bar, zugeführt werden.

Die vorstehenden Ausführungen für die Werkzeugkomponenten und die Heißpresseinrichtung gelten in entsprechender Weise auch für die verschiedenen Verfahren.

Weitere Merkmale, Ausgestaltungen und Vorteile ergeben sich aus der nachfolgenden Darstellung von Ausführungsbeispielen mit Bezug auf die Figuren.

### Kurzbeschreibung der Figuren

In den Zeichnungen zeigt:
- Fig. 1: eine schematische Darstellung einer Faserformanlage zur Herstellung von Produkten aus einem Fasermaterial;
- Fig. 2: eine schematische Darstellung einer Formstation mit einer Heißpresseinrichtung zum Heißpressen von Vorformlingen zur Herstellung von Produkten aus einem Fasermaterial mit einem Heißpresswerkzeug;
- Fig. 3: eine schematische Darstellung einer Werkzeugkomponente eines Heißpresswerkzeugs in perspektivischer Ansicht;
- Fig. 4: eine erste schematische Schnittansicht der Werkzeugkomponente von Fig. 3;
- Fig. 5: eine zweite schematische Schnittansicht der Werkzeugkomponente von Fig. 3;
- Fig. 6: ein Verfahren zum Herstellen von Produkten aus einem Fasermaterial; und
- Fig. 7a, b: verschiedene Darstellungen einer Schale als fertiges Produkt aus einem Fasermaterial, hergestellt nach einem hierin beschriebenen Herstellungsprozess.

### Detaillierte Beschreibung von Ausführungsbeispielen

Nachfolgend werden mit Bezug auf die Figuren Ausführungsbeispiele der hierin beschriebenen technischen Lehre dargestellt. Für gleiche Komponenten, Teile und Abläufe werden in der Figurenbeschreibung gleiche Bezugszeichen verwendet. Für die hierin offenbarte technische Lehre unwesentliche oder für einen Fachmann sich erschließende Komponenten, Teile und Abläufe werden nicht explizit wiedergegeben. Im Singular angegebene Merkmale sind auch im Plural mitumfasst, sofern nicht explizit etwas anderes ausgeführt ist. Dies betrifft insbesondere Angaben wie "ein" oder "eine".

Die Figuren zeigen Ausführungsbeispiele von Werkzeugkomponenten 640, 690, Heißpresseinrichtungen 610 sowie zugehörige Formstationen 600, Faserformanlagen 1000 und Verfahren 2000 zum Betreiben von Faserformanlagen 1000, insbesondere zum Heißpressen von Faserformlingen. Die gezeigten Ausführungsbeispiele stellen hierbei keine Einschränkung im Hinblick auf weitere Ausbildungen und Modifikationen der beschriebenen Ausführungen dar.

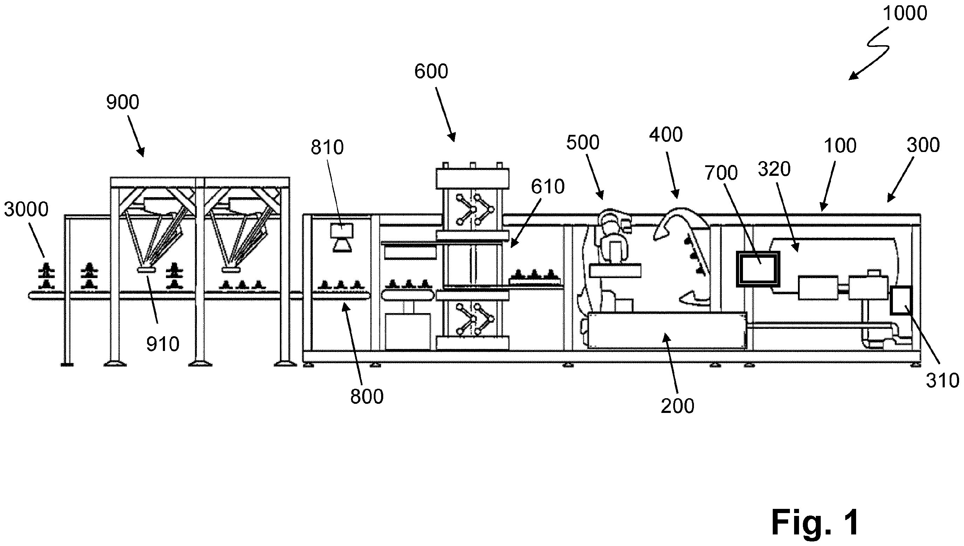

Fig. 1 zeigt eine schematische Darstellung einer Faserformanlage 1000 zur Herstellung von Produkten aus einem Fasermaterial. Das Fasermaterial für die Herstellung von Produkten wird im gezeigten Ausführungsbeispiel von einer Faseraufbereitungsanlage bereitgestellt und der Faserformanlage 1000 zur Verfügung gestellt. Die Bereitstellung und das zur Verfügungstellen kann bspw. über Versorgungsleitungen erfolgen, in welchen flüssige Pulpe aus einer Faseraufbereitungsanlage zu einem Vorratsbehälter oder einem Pulpebecken 200 der Faserformanlage 1000 bspw. kontinuierlich oder diskontinuierlich zugeführt wird.

Alternativ kann Pulpe in einem Pulpebecken 200 der Faserformanlage 200 aufbereitet werden. Hierzu können über eine Flüssigkeitszufuhr bspw. Wasser und Faserstoffe sowie ggf. Zusätze in ein Pulpebecken 200 eingebracht und die Pulpe in dem Pulpebecken 200 durch Vermischen der einzelnen Komponenten unter Wärmeeintrag und von Hilfsmitteln, wie bspw. eines Rührers, aufbereitet werden.

Als Pulpe wird eine wässrige Lösung bezeichnet, die Fasern aufweist, wobei der Fasergehalt an der wässrigen Lösung in einem Bereich von 0,5 bis 10 Gew.-% vorliegen kann. Zusätzlich können Zusätze, wie bspw. Stärke, chemische Zusätze, Wachs, etc. enthalten sein. Bei den Fasern kann es sich bspw. um natürliche Fasern, wie Cellulosefasern, oder Fasern aus einem faserhaltigen Ursprungsmaterial (z.B. Altpapier) handeln.

Eine Faseraufbereitungsanlage bietet die Möglichkeit, Pulpe in großer Menge aufzubereiten und mehreren Faserformanlagen 1000 zur Verfügung zu stellen.

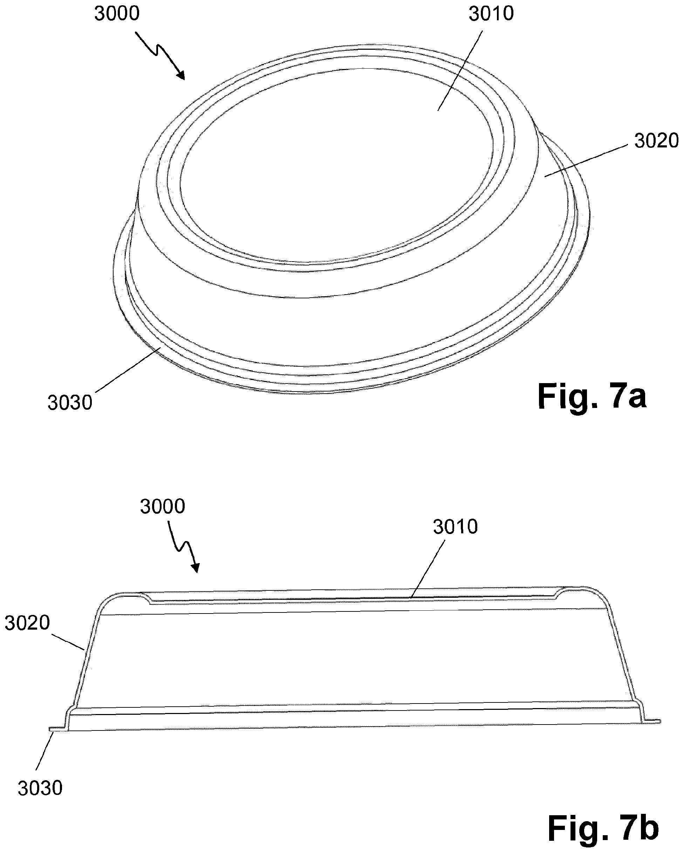

Über die Faserformanlage 1000 lassen sich bspw. biologisch abbaubare Becher, Kapseln, Schalen 3000 (Fig. 7a, b), Teller und weitere Form- und/oder Verpackungsteile (bspw. als Halter-/Stützstrukturen für elektronische Geräte) herstellen. Da als Ausgangsmaterial für die Produkte eine faserhaltige Pulpe mit natürlichen Fasern verwendet wird, können die so hergestellten Produkte nach ihrer Verwendung selbst wieder als Ausgangsmaterial für die Herstellung von derartigen Produkten dienen oder kompostiert werden, weil diese in der Regel vollständig zersetzt werden können und keine bedenklichen, umweltgefährdenden Stoffe enthalten.

Die in Fig. 1 gezeigte Faserformanlage 1000 weist einen Rahmen 100 auf, der von einer Verkleidung umgeben sein kann. Eine Verkleidung kann transparente Seitenwände aufweisen, über welche Stationen und Einheiten der Faserformanlage 1000 sichtbar sind und der Herstellungsprozess von Produkten optisch überwacht werden kann. Eine Verkleidung dient zum Schutz vor beweglichen und mitunter stark erwärmten Teilen der Faserformanlage 1000 sowie vor Fasermaterial aus der Pulpe und der Pulpe selbst, welche beim Herstellungsprozess "herumspritzen" können. Über eine Tür kann ein Zugang zu Versorgungseinheiten 300 der Faserformanlage 1000 bereitgestellt werden. An der in Fig. 1 dargestellten Längsseite kann eine Verkleidung verschiebbare oder drehbare Türen aufweisen, so dass sämtliche Stationen der Faserformanlage 1000 gewartet werden können. Die Versorgungseinheiten 300 der Faserformanlage 1000 umfassen bspw. Schnittstellen für die Zufuhr von Medien (bspw. Wasser, Pulpe, Druckluft, Gas, etc.) und Energie (Stromversorgung), eine zentrale Steuereinheit 310, mindestens eine Absaugeinrichtung 320, Leitungssysteme für die verschiedenen Medien, Pumpen, Ventile, Leitungen, Sensoren, Messeinrichtungen, ein BUS-System, etc. sowie Schnittstellen für eine bidirektionale Kommunikation über eine drahtgebundene und/oder drahtlose Datenverbindung. Anstelle einer drahtgebundenen Datenverbindung kann auch eine Datenverbindung über eine Glasfaserleitung bestehen. Die Datenverbindung kann bspw. zwischen der Steuereinheit 310 und einer zentralen Steuerung für mehrere Faserformanlagen 1000, zu einer Faseraufbereitungsanlage, zu einer Service-Stelle und/oder weiteren Einrichtungen bestehen. Es kann über eine bidirektionale Datenverbindung auch eine Steuerung der Faserformanlage 1000 über eine mobile Einrichtung, wie bspw. ein Smartphone, Tablet-Computer oder dergleichen erfolgen.

Die Steuereinheit 310 steht über ein BUS-System oder eine Datenverbindung mit einem HMI-Panel 700 in bidirektionaler Kommunikation. Das HMI-Panel 700 weist ein Display auf, welches Betriebsdaten und Zustände der Faserformanlage 1000 für auswählbare Bestandteile oder die gesamte Faserformanlage 1000 anzeigt. Das Display kann als Touch-Display ausgebildet sein, so dass hierüber Einstellungen per Hand von einem Operator der Faserformanlage 1000 vorgenommen werden können. Zusätzlich oder alternativ können an dem HMI-Panel 700 weitere Eingabemittel, wie bspw. eine Tastatur, ein Joystick, ein Tastenfeld etc. für Operatoreingaben vorgesehen sein. Hierüber können Einstellungen verändert und Einfluss auf den Betrieb der Faserformanlage 1000 vorgenommen werden.

Die Faserformanlage 1000 weist einen Roboter 500 auf. Der Roboter 500 ist als sogenannter 6-Achs Roboter ausgebildet und damit in der Lage innerhalb seines Aktionsradius Teile aufzunehmen, zu rotieren und in sämtliche Raumrichtungen zu bewegen. Anstelle des in den Figuren gezeigten Roboters 500 können auch andere Handling-Einrichtungen vorgesehen sein, die dazu ausgebildet sind, Produkte aufzunehmen und zu verdrehen beziehungsweise zu rotieren und in die verschiedenen Raumrichtungen zu bewegen. Darüber hinaus kann eine derartige Handling-Einrichtung auch anderweitig ausgebildet sein, wobei hierzu die Anordnung der entsprechenden Stationen der Faserformanlage 1000 von dem gezeigten Ausführungsbeispiel abweichen kann.

An dem Roboter 500 ist ein Saugwerkzeug angeordnet. Das Saugwerkzeug weist in dem gezeigten Ausführungsbeispiel als Negativ der zu formenden Produkte, wie bspw. von in Fig. 7a, b gezeigten Schalen 3000, ausgebildete Saugformen auf. Diese Saugformen können bspw. eine netzartige Struktur aufweisen, an der sich Fasern aus der Pulpe anlagern. Die Saugformen weisen weiter Öffnungen auf, über welche mittels eines Vakuums Pulpe angesaugt werden kann, wenn sich das Saugwerkzeug so innerhalb des Pulpebeckens 200 befindet, dass sich die Saugformen zumindest partiell in der wässrigen Faserlösung, der Pulpe, befinden. Ein Vakuum bzw. ein Unterdruck zum Ansaugen von Fasern, wenn sich das Saugwerkzeug in dem Pulpebecken 200 und der Pulpe befindet, können über die Absaugeinrichtung 320 bereitgestellt werden. Hierzu weist die Faserformanlage 1000 entsprechende Mittel bei den Versorgungseinheiten 300 auf. Das Saugwerkzeug weist Leitungen zur Bereitstellung des Vakuums/Unterdrucks von der Absaugeinrichtung 320 bei den Versorgungseinheiten 300 zu dem Saugwerkzeug und den Öffnungen in den Saugformen auf. In den Leitungen sind Ventile angeordnet, die über die Steuereinheit 310 angesteuert werden können und damit das Ansaugen der Fasern regeln. Es kann durch die Absaugeinrichtung 320 anstelle eines Ansaugens auch ein "Ausblasen" erfolgen, wozu die Absaugeinrichtung 320 entsprechend ihrer Ausgestaltung in einen anderen Betriebsmodus geschaltet wird.

Bei der Herstellung von Produkten aus einem Fasermaterial wird das Saugwerkzeug in die Pulpe getaucht und ein Unterdruck/Vakuum an den Öffnungen der Saugformen angelegt, so dass Fasern aus der Pulpe angesaugt werden und sich an den Saugformen des Saugwerkzeugs anlagern. Anschließend bewegt der Roboter 500 das Saugwerkzeug mit den an den Saugformen anhaftenden Fasern, die noch einen relativ hohen Feuchtigkeitsgehalt von bspw. über 80 Gew.-% an Wasser aufweisen, an eine Vorpressstation 400 der Faserformanlage 1000. Dabei wird der Unterdruck an den Saugformen aufrechterhalten. Die Vorpressstation 400 weist ein Vorpresswerkzeug mit Vorpressformen auf. Die Vorpressformen können bspw. als Positiv der zu formenden Produkte ausgebildet sein und zur Aufnahme der an den Saugformen anhaftenden Fasern eine entsprechende Größe im Hinblick auf die Gestalt der Produkte aufweisen.

Bei der Herstellung von Produkten wird das Saugwerkzeug mit den an den Saugformen anhaftenden Fasern so zu der Vorpressstation 400 bewegt, dass die Fasern in die Vorpressformen gedrückt werden. Dabei werden die Fasern an den Saugformen miteinander verpresst, so dass hierüber eine stärkere Verbindung zwischen den Fasern erzeugt wird. Zudem wird dabei der Feuchtigkeitsgehalt der dadurch gebildeten Vorformlinge reduziert, so dass die nach dem Vorpressen gebildeten Vorformlinge nur noch einen Feuchtigkeitsgehalt von bspw. 60 Gew.-% aufweisen.

Während des Vorpressens kann Flüssigkeit bzw. Pulpe über das Saugwerkzeug und/oder über weitere Öffnungen in den Vorpressformen abgesaugt und zurückgeführt werden. Die beim Ansaugen über das Saugwerkzeug und/oder beim Vorpressen in der Vorpressstation 400 austretende Flüssigkeit bzw. Pulpe kann in das Pulpebecken 200 zurückgeführt werden.

Nach dem Vorpressen in der Vorpressstation 400 werden die so erzeugten Vorformlinge an dem Saugwerkzeug über den Roboter 500 zu einer Formstation 600 bewegt. Hierzu wird der Unterdruck am Saugwerkzeug aufrechterhalten, damit die Vorformlinge an oder in den Saugformen verbleiben. Die Vorformlinge werden über das Saugwerkzeug auf einen ersten, unteren Werkzeugkörper 642 übergeben, welcher entlang der Fertigungslinie aus der Heißpresseinrichtung 610 verfahrbar ist. Befindet sich der Werkzeugkörper 642 in seiner ausgefahrenen Position, wird das Saugwerkzeug so zu dem Werkzeugkörper 642 bewegt, dass die Vorformlinge auf erste Formeinrichtungen 670 des Werkzeugkörpers 642 aufgesetzt werden können. Anschließend wird über die Öffnungen im Saugwerkzeug ein Überdruck erzeugt, so dass die Vorformlinge aktiv von den Saugformen abgelegt werden, oder das Ansaugen wird beendet, sodass die Vorformlinge schwerkraftbedingt auf den ersten Formeinrichtungen 670 des ersten Werkzeugkörpers 642 verbleiben. Durch eine Bereitstellung von Überdruck an den Öffnungen der Saugformen können vorgepresste Vorformlinge, die an den Saugformen anliegen/anhaften, gelöst und abgegeben werden.

Danach wird das Saugwerkzeug über den Roboter 500 wegbewegt und das Saugwerkzeug wird in das Pulpebecken 200 getaucht, um weitere Fasern zur Herstellung von faserhaltigen Produkten anzusaugen.

In der Formstation 600 erfolgt dann unter Wärmeeintrag ein Verpressen. Nach diesem Heißpressvorgang werden der erste Werkzeugkörpers 642 und der zweite Werkzeugkörper 692 relativ voneinander wegbewegt und der obere, zweite Werkzeugkörper 692 entlang der Faserformanlage 1000 in Fertigungsrichtung bewegt, wobei nach dem Heißpressen die gefertigten Produkte über den oberen, zweiten Werkzeugkörper 692 angesaugt werden und damit innerhalb der zweiten Formeinrichtungen 694 verbleiben. Somit werden die gefertigten Produkte aus der Formstation 600 verbracht und über den zweiten Werkzeugkörper 692 nach dem Verfahren auf einem Transportband einer Fördereinrichtung 800 abgelegt. Nach dem Ablegen wird das Ansaugen über den zweiten Werkzeugkörper 692 beendet und die Produkte verbleiben auf dem Transportband. Der zweite, obere Werkzeugkörper 692 fährt zurück in die Formstation 600 und ein weiterer Heißpressvorgang kann durchgeführt werden.

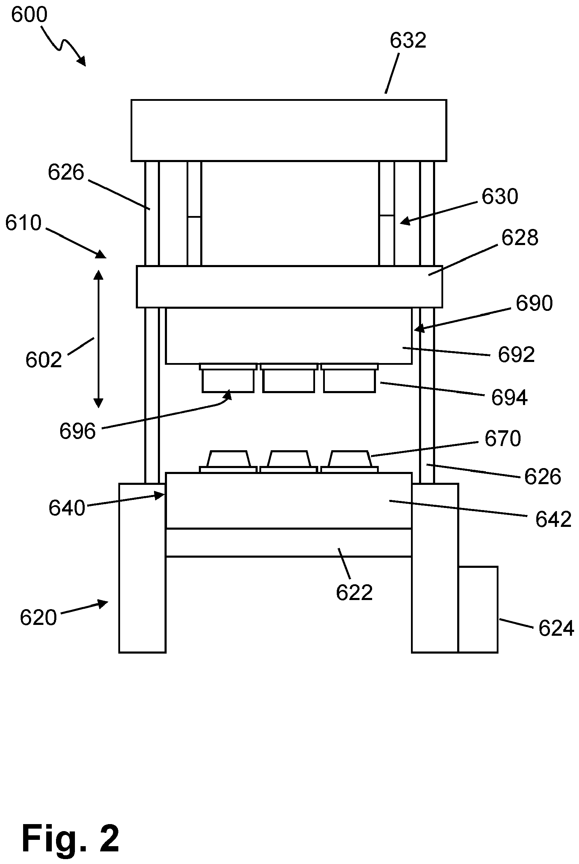

Die Formstation 600 weist eine Heißpresseinrichtung 610 auf. In der Heißpresseinrichtung 610 erfolgt das Verpressen der Vorformlinge zu fertigen Produkten aus faserhaltigem Material unter Wärmeeinwirkung. Eine mögliche Ausgestaltung der Formstation 600 ist schematisch in Fig. 2 gezeigt.

Die Faserformanlage 1000 weist weiterhin eine Fördereinrichtung 800 mit einem Transportband auf. Auf das Transportband können die gefertigten Produkte aus faserhaltigen Material nach dem finalen Formen und dem Heißpressen in der Formstation 600 abgelegt und aus der Faserformanlage 1000 ausgebracht werden. In weiteren Ausführungen kann nach dem Ablegen der Produkte auf das Transportband der Fördereinrichtung 800 eine weitere Bearbeitung erfolgen, wie bspw. ein Bedrucken, ein Befüllen und/oder ein Stapeln der Produkte. Das Stapeln kann bspw. über einen zusätzlichen Roboter oder eine andere Einrichtung erfolgen. Eine solche Einrichtung kann bspw. mindestens einen Greifer 910 aufweisen, der die auf dem Transportband abgelegten Produkte greift und in einer Kiste oder ähnlichem stapelt. Der mindestens eine Greifer 910 kann zur Erfassung der Position und Ausrichtung von Produkten mit einer optischen Einrichtung, wie bspw. einer Kamera, zusammenarbeiten, wobei die anhand der Kamera erfassten Bilder über eine Software ausgewertet werden, die dann auf Basis der ausgewerteten Bilder Steuerbefehle für den mindestens einen Greifer ausgibt.

Zudem weist die Faserformanlage 1000 eine in Fertigungsrichtung der Formstation 600 nachgelagerte Stapeleinrichtung 900 auf. Die Stapeleinrichtung 900 weist in dem gezeigten Ausführungsbeispiel zwei hintereinander angeordnete Greifereinrichtungen mit jeweils einem Greifer 910 auf. Über die Greifer 910 können einzelne Schalen 3000 nach dem Heißpressen gegriffen und bspw. gestapelt werden, wie in Fig. 1 schematisch gezeigt. Vor der Stapeleinrichtung 900 ist eine Kamera 810 angeordnet, welche die Position und Ausrichtung der auf einem Transportband einer Fördereinrichtung 800 angeordneten Schalen 3000 erfasst. Die erfassten Bilder werden von der Steuerung ausgewertet, welche daraus Steuerbefehle für die Greifer 910 zum Aufnehmen der Schalen 3000 generiert.

In weiteren Ausführungen kann eine Faserformanlage 1000 einen Kran zum Wechseln eines ersten Werkzeugkörper 642 und eines zweiten Werkzeugkörpers 692 für ein Umrüsten der Faserformanlage 1000 auf andere Produkte oder zur Wartung des Werkzeugkörpers 642 und/oder des Werkzeugkörpers 992 aufweisen.

Fig. 2 zeigt eine schematische Darstellung der Formstation 600 mit einer Heißpresseinrichtung 610 zum Heißpressen von Vorformlingen zur Herstellung von Produkten aus einem Fasermaterial mit einem Heißpresswerkzeug.

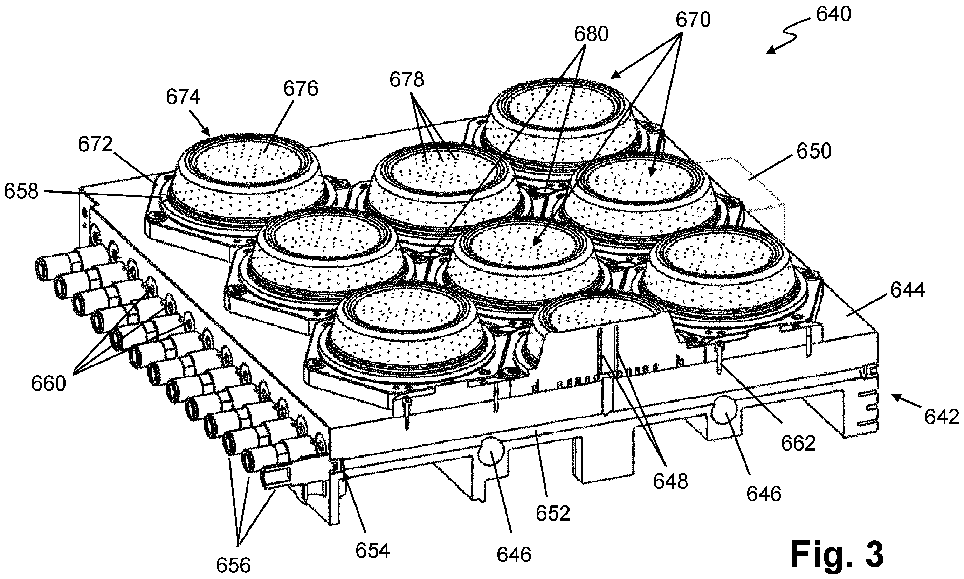

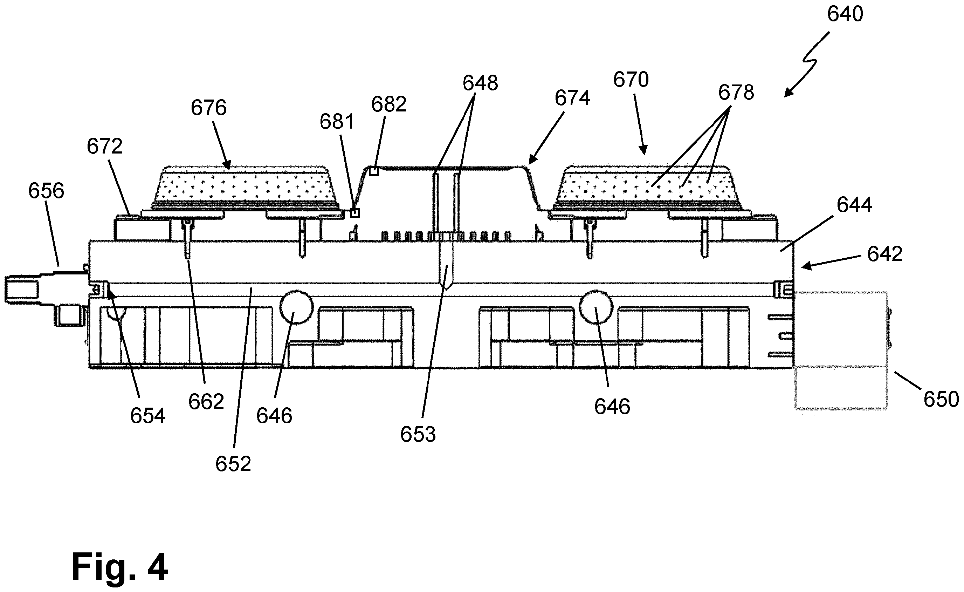

Fig. 2 zeigt die Formstation 600 in einem geöffneten Zustand. Die Formstation 600 mit der Heißpresseinrichtung 610 weist ein Untergestell 620 mit einem Werkzeugtisch 622 auf. Auf dem Werkzeugtisch 622 ist eine erste Werkzeugkomponente 640 angeordnet. Die erste Werkzeugkomponente 640 weist den ersten, unteren Werkzeugkörper 642 auf, der linear verlagerbar auf dem Werkzeugtisch 622 angeordnet ist. Der erste Werkzeugkörper 642 ist relativ zum Werkzeugtisch 622 in Zeichnungsrichtung verfahrbar. Hierzu ist ein Schienensystem oder eine andere Einrichtung zum linearen Verlagern des ersten Werkzeugkörpers 642 vorgesehen. Zusätzlich ist ein Antrieb vorgesehen, der die lineare Verlagerung des ersten Werkzeugkörpers 642 ausführt. Der Antrieb wird durch die Steuereinheit 310 nach Maßgabe von Steuersignalen geregelt. An der Oberseite des ersten Werkzeugkörpers 642 sind mehrere Formeinrichtungen 670 angeordnet, die als Negativ der zu formenden Produkte ausgebildet sind. Die Ausgestaltung der Formeinrichtungen wird nachfolgend mit Bezug auf Fig. 3 und 4 näher erläutert.

Die Formstation 600 weist eine zweite Werkzeugkomponente 690 mit dem zweiten Werkzeugkörper 692 auf. Der zweite, obere Werkzeugkörper 692 weist an seiner Unterseite zweite Formeinrichtungen 696 auf, die als Positiv der zu formenden Produkte ausgebildet sind. Wenn die erste Werkzeugkomponente 640 und die zweite Werkzeugkomponente 690 zueinander verlagert und verpresst sind, wird zwischen den Anlageflächen 676, 696 der ersten Formeinrichtungen 670 und der zweiten Formeinrichtungen 694 jeweils eine Kavität erzeugt, deren Ausmaße und Form denjenigen der zu fertigenden Produkte entspricht.

Der obere Werkzeugkörper 692 ist an einem oberen Werkzeugtisch 628 linear verlagerbar angeordnet, wobei hierüber der obere Werkzeugkörper 692 in entgegengesetzte Richtung zum ersten Werkzeugkörper 642 über ein Schienensystem oder ähnliches und einen zugehörigen Antrieb verlagert werden kann, wenn ein Heißpressvorgang beendet ist, um die gefertigten Produkte auf das Transportband der Fördereinrichtung 800 abzulegen. Die Ansteuerung des Antriebs erfolgt über die Steuereinheit 310.

Der obere Werkzeugtisch 628 ist über Führungsstangen 626 in Bewegungsrichtung 602 über eine Presse, die bspw. als Kniehebelpresse 630 ausgebildet sein kann, verlagerbar. Anstelle der Kniehebelpresse 630 kann in einer weiteren Ausführung die Presse durch eine linear verfahrbare Presseinrichtung, die ebenfalls durch das Bezugszeichen "630" bezeichnet ist, realisiert sein. Eine Presseinrichtung kann bspw. pneumatisch, hydraulisch und/oder elektrisch über entsprechende Einrichtungen angetrieben werden und die relative Verlagerung von erster Werkzeugkomponente 640 und zweiter Werkzeugkomponente 690 ausführen. Die Kniehebelpresse 630 ist an einem Tragjoch 632 der Formstation 600 angeordnet. Nach Maßgabe der Steuereinheit 310 wird über die Kniehebelpresse 630 die zweite Werkzeugkomponente 690 nach unten zu der ersten Werkzeugkomponente 640 bewegt, wobei der zweite Werkzeugkörper 692 mit den zweiten Formeinrichtungen 694 über den oberen Werkzeugtisch 628 und die Führungsstangen 626 geführt ist.

Eine Schnittstelle 624 dient in dem gezeigten Ausführungsbeispiel zur Bereitstellung von Steuerbefehlen, zur Energieversorgung, zur Bereitstellung von Medien (z.B. Druckluft, etc.) und zur Abführung von Medien (z.B. angesaugtes Fluid, Luft, Wasser, etc.).

Der erste Werkzeugkörper 642 und die ersten Formeinrichtungen 670 sowie der zweite Werkzeugkörper 692 mit den zweiten Formeinrichtungen 694 bestehen insbesondere aus einem Material mit sehr guten Wärmeleiteigenschaften. Vorzugsweise werden hierzu Metalle eingesetzt. In den gezeigten Ausführungsformen bestehen der erste Werkzeugkörper 642 und die ersten Formeinrichtungen 670 sowie der zweite Werkzeugkörper 692 und die zweiten Formeinrichtungen 694 aus Aluminium.

In dem ersten Werkzeugkörper 642 und in dem zweiten Werkzeugkörper 692 sind Temperiermittel aufgenommen, welche eine Beheizung der Werkzeugkörper 642 und 692 sowie der Formeinrichtungen 670, 694 bereitstellen. Die Temperiermittel werden nach Maßgabe von Steuersignalen der Steuereinheit 310 angesteuert. Bspw. handelt es sich bei den Temperiermitteln um Heizpatronen 660. Heizpatronen 660 erzeugen durch Anlegen einer elektrischen Spannung Wärme. Somit lässt sich die Erwärmung der Werkzeugkomponenten 640, 690 hierüber einfach regeln. In weiteren Ausführungen können auch andere Temperiermittel zum Einsatz kommen.

Fig. 3 zeigt eine schematische, teilweise geschnittene Darstellung einer Werkzeugkomponente 640 eines Heißpresswerkzeugs in perspektivischer Ansicht. Die erste Werkzeugkomponente 640 weist an ihrer Oberseite eine Platte 644 auf, auf welche Formeinrichtungen 670 zum Heißpressen von Schalen 3000 über Befestigungsmittel, wie bspw. Schrauben 662 und zugeordnete Öffnungen in der Platte 644, mit dem ersten Werkzeugkörper 642 verbunden werden können. Die ersten Formeinrichtungen 670 weisen einen Sockel 672 mit entsprechenden Öffnungen zum Befestigen mit dem ersten Werkzeugkörper 642 auf, wobei die Sockel 672 nicht zur Formgebung der Schalen 3000 eingesetzt werden. Dies ermöglicht den Austausch von ersten Formeinrichtungen 670, um bspw. die Faserformanlage 1000 auf andere Produkte umzurüsten oder verschmutzte, bzw. beschädigte erste Formeinrichtungen 670 zur Wartung auszutauschen.

An der Unterseite ist der erste Werkzeugkörper 642 entsprechend dem Schienensystem zum Verlagern des ersten Werkzeugkörpers 642 ausgebildet. Hierzu ist weiter eine Zahnstange am ersten Werkzeugkörper 642 angeordnet, die mit einem angetriebenen Zahnrad eines am Werkzeugtisch 622 vorgesehenen Antriebs in Eingriff steht. Durch Rotation des Zahnrads über den Antrieb kann damit ein Vorschub des ersten Werkzeugkörpers 642 zum Verlagern dessen erfolgen.

In dem ersten Werkzeugkörper 642 erstrecken sich in dem gezeigten Ausführungsbeispiel zwei erste Kanäle 646 im Wesentlichen in Zeichnungsrichtung hinein. Die ersten Kanäle 646 stehen über eine Verbindungseinheit 650 fluidisch mit einer Einrichtung zum Absaugen, bspw. der Absaugeinrichtung 320, in Verbindung, so dass über einen entsprechenden ersten Anschluss und die Verbindungseinheit 650 ein Vakuum in den ersten Kanälen 646 erzeugt werden kann. Die ersten Kanäle 646 im ersten Werkzeugkörper 642 stehen zudem mit zweiten Kanälen 652 in Verbindung, wobei die zweiten Kanäle 652 quer zu den ersten Kanälen 646 verlaufen und parallel zueinander ausgerichtet sind.

Die zweiten Kanäle 652 weisen zweite Anschlüsse 654 auf, die mit Ventilen 656 ausgestattet sind. In dieser Ausführungsform bilden die zweiten Anschlüsse 654 zweite Öffnungen, über welche die Zufuhr von Umgebungsluft, oder in weiteren Ausführungen die Zufuhr eines Gases (z.B. Sauerstoff) oder eines anderen Gasgemischs erfolgt. In noch weiteren Ausführungen können die Menge und der Druck des zugeführten Gases oder Gasgemischs über einen Verdichter geregelt werden. Ein solcher Verdichter kann bspw. in den Versorgungseinheiten 300 angeordnet und über die Schnittstelle 624 mit mindestens einer zweiten Öffnung fluidisch verbunden sein, um während des Heißpressens einen "Nebenstrom" an Gas oder eines Gasgemischs bereitzustellen.

In weiteren Ausführungen sind zweite Öffnungen an weiteren Flächen des ersten Werkzeugkörpers 642 angeordnet. Bspw. können eine oder mehrere zweite Öffnungen an der Oberfläche der Platte 644, an einer der Platte 644 gegenüberliegenden Unterseite oder an weiteren Seitenwänden, orthogonal zur Seitenwand mit den in Fig. 3 gezeigten Ventilen 656 oder gegenüberliegend, angeordnet sein. Bspw. kann bei an der Oberfläche der Platte 644 angeordneten zweiten Öffnungen erreicht werden, dass relativ kurze zweite Kanäle vorgesehen sind, so dass es zu einem geringen Kühlen des Werkzeugkörpers 642 und damit von Formeinrichtungen 670 kommt. An der Oberfläche der Platte 644 angeordnete zweite Öffnungen können insbesondere zwischen ersten Formeinrichtungen 670 vorgesehen sein, weil dort im Betrieb der Heißpresseinrichtung lokal die stärkste Erwärmung des Werkzeugkörpers 642 auftreten kann. Damit kann ein Erwärmen des über die zweiten Öffnungen zugeführten Nebenstroms an Gas oder Gasgemisch erreicht werden, ohne dass die dafür dem Werkzeugkörper 642 entzogene Energie lokal zu einem Unterschreiten einer Solltemperatur des Werkzeugkörpers 642 für die Erwärmung der Formeinrichtungen 670 führt.

In noch weiteren Ausführungen enthalten die Versorgungseinheiten 300 Heizeinrichtungen zum Erwärmen des Nebenstroms an Gas oder Gasgemisch, so dass über die zweiten Öffnungen ein Nebenstrom mit definierter Temperatur eingebracht werden kann. Da die Sättigung des Nebenstroms an Wasser entscheidend für die Fähigkeit der Wasserdampfabfuhr ist, können die Versorgungseinheiten 300 in weiteren Ausführungen auch Einrichtungen zum Entfeuchten des Nebenstroms an Gas oder Gasgemisch aufweisen, bevor der Nebenstrom über mindestens eine zweite Öffnung zugeführt wird. Einrichtungen zum Entfeuchten können insbesondere dann erforderlich sein und den Heißpressprozess maßgeblich unterstützen, wenn bspw. Umgebungsluft für den Nebenluftstrom herangezogen wird, und die Umgebungsluft bereits eine relativ hohe Wassersättigung bzw. Luftfeuchtigkeit aufweist.

In weiteren Ausführungen kann der abgesaugte oder anderweitig abgeführte Strom an Wasserdampf/Gas, der eine verhältnismäßig hohe Temperatur aufweist (> 90 °C), über einen Wärmetauscher geführt werden, der die Wärme an einen angesaugten oder einen anderweitig bereitgestellten Nebenstrom übergibt, der über die zweiten Öffnungen oder Ventile 656 zugeführt wird. Damit wird die Energie des abgeführten Stroms aus den Kavitäten genutzt, um den Nebenstrom aufzuheizen. Dies verhindert oder reduziert ein Abkühlen der Werkzeugkomponenten 640, 690 über den Nebenstrom. Ferner weist bspw. wärmere Luft eine höhere Aufnahmefähigkeit an Wasserdampf auf, weil die Sättigung geringer ist. Damit wird weiter die Abfuhr von Wasserdampf verbessert.

Über die Ventile 656 stehen die zweiten Kanäle 652 mit der Umgebung fluidisch in Verbindung, sodass hierüber bspw. ein Gasgemisch (z.B. Umgebungsluft) oder ein Gas angesaugt werden kann. Die Ventile 656 können über die Steuereinheit 310 angesteuert werden und können somit regeln, welche Menge an Gasgemisch oder Gas angesaugt werden kann. An den den Ventilen 656 gegenüberliegenden Enden sind die zweiten Kanäle 652 geschlossen. In weiteren Ausführungsformen weisen zweite Kanäle 652 keine Ventile 656 auf, so dass permanent eine Verbindung zur Umgebung oder einer Einrichtung zur Bereitstellung von Gas oder Gasgemisch über entsprechende zweite Öffnungen hergestellt ist und ein Gasgemisch oder ein Gas beim Bereitstellen eines Vakuums oder Unterdrucks in den ersten Kanälen 646 mit angesaugt wird.

Von den zweiten Kanälen 652 erstrecken sich senkrechte Kanalabschnitte 653 durch die Platte 644 und liegen korrespondierenden Öffnungen im Sockel 672 an den Unterseiten der ersten Formeinrichtungen 670 gegenüber. Die ersten Formeinrichtungen 670 weisen Formkanäle 648 auf, welche in zahlreiche Öffnungen 678 an den Oberflächen der über die ersten Formeinrichtungen 670 gebildeten Formen 674 münden. Die Oberflächen der Formen 674 bilden dabei erste Anlageflächen 676 für aufzunehmende Vorformlinge aus faserhaltigem Material.

Die gezeigten Formen 674 dienen zur Herstellung von Schalen 3000 als fertige Produkte aus den Vorformlingen. Hierzu weisen die Formen 674 eine ebene Fläche auf, die für die Ausbildung des Bodens 3010 einer Schale 3000 dient. Von dem Boden 3010 erstreckt sich eine umlaufende Seitenwand 3020, die durch die schrägen Seitenflächen der Formen 674 gebildet wird. Eine fertige Schale 3000 (Fig. 7a) weist in dem gezeigten Ausführungsbeispiel eine im Wesentlichen kreisrunde Bodenfläche und eine umlaufende, steile Seitenfläche auf, deren oberes, dem Boden 3010 abgewandtes Ende, einen Rand 3030 aufweist, der an dem unteren Ring der Formen 674 gebildet wird, der sich um die schrägen Seitenflächen erstreckt.

Parallel zu den zweiten Kanälen 652 erstrecken sich Heizpatronen 660 durch den ersten Werkzeugkörper 642, die über die Verbindungseinheit 650 mit Strom versorgt werden und über die Steuereinheit 310 ansteuerbar sind. In dem gezeigten Ausführungsbeispiel wird der erste Werkzeugkörper 642 über die Heizpatronen 660 auf bspw. 250 °C aufgeheizt. In weiteren Ausführungen kann der erste Werkzeugkörper 642 bspw. in einem Temperaturbereich zwischen 150 °C und 300 °C beheizt werden. Es kann über Heizpatronen 660 oder andere Temperiermittel auch ein Erwärmen des zweiten Werkzeugkörpers 692 erfolgen, wobei insbesondere im gleichen Temperaturbereich wie für den ersten Werkzeugkörper 642 gearbeitet werden kann. Im gezeigten Ausführungsbeispiel können bspw. der erste Werkzeugkörper 642 und der zweite Werkzeugkörper 692 im Wesentlichen auf das gleiche Temperaturniveau gebracht werden.

In Fig. 3 sind erste Temperatursensoren 680 gezeigt, welche im Bereich von Verbindungsstellen zwischen den Sockeln 672 einzelner erster Formeinrichtungen 670 angeordnet sind. Die ersten Temperatursensoren 680 können zur Bestimmung des Temperaturverhaltens beim Heißpressen nur für einen bestimmten Zeitraum oder dauerhaft beim Betrieb während einer Produktion von Produkten vorgesehen sein und betrieben werden. Die ersten Temperatursensoren 680 sind über zugehörige Leitungen mit der Steuereinheit 310 verbunden. In weiteren Ausführungen kann auch eine drahtlose bidirektionale Kommunikationsstrecke zwischen Temperatursensoren 680, 681, 682 und der Steuereinheit 310 bestehen. Für den Betrieb der Temperatursensoren kann die benötigte Energie bspw. über Energiespeichermittel bereitgestellt werden, die mit den jeweiligen Temperatursensoren dann verbunden sind. Die Steuereinheit 310 kann somit anhand der erfassten Temperaturwerte das Erwärmen der ersten Werkzeugkomponente 640 und der zweiten Werkzeugkomponente 690 sowie die Zykluszeit zum Heißpressen, insbesondere die Dauer und die Zufahrgeschwindigkeit der Formeinrichtung 600 regeln.

In Fig. 3 ist eine weitere Ausführungsform mit einer als Mulde 658 ausgebildeten zweiten Öffnung gezeigt. Die Mulde 658 befindet sich in einem Anlagebereich einer Formeinrichtung 670 für einen korrespondierenden Anlagebereich einer zweiten Formeinrichtung 694. Im geschlossenen Zustand der Heißpresseinrichtung 610 liegen die erste Formeinrichtung 670 und die zweite Formeinrichtung 694 an gegenüberliegenden Flächen der Anlagebereiche an. Im Bereich der Mulde 658 ist dann eine kleine zweite Öffnung gebildet, über die getrennt vom ersten Anschluss eine fluidische Verbindung zu den ersten Öffnungen 678 bereitgestellt ist. Über eine solche Mulde 658 kann bspw. Umgebungsluft während des Heißpressens mit angesaugt werden. Weiterhin ist es auch möglich, ein anderes Gasgemisch oder ein Gas hierüber in die Kavität einzubringen. In weiteren Ausführungen kann dabei die korrespondierend ausgebildete zweite Formeinrichtung 694 ebenfalls eine Mulde 658 oder keine Mulde 658 aufweisen. Es können in weiteren Ausführungen mehrere Mulden 658 um die Kavität herum verteilt vorgesehen sein.

Fig. 4 zeigt eine erste schematische Schnittansicht der ersten Werkzeugkomponente 640 von Fig. 3. Aus Fig. 4 ist die Verbindung zwischen den ersten Kanälen 646, den zweiten Kanälen 652 und den Formkanälen 648 über einen senkrechten Kanalabschnitt 653 ersichtlich. Die Formeinrichtungen 670 weisen im Sockel 672 an ihrer Unterseite eine Öffnung auf, die den Kanalabschnitten 653 gegenüberliegt, so dass durch Bereitstellung eines Unterdrucks in den ersten Kanälen 646 automatisch Vorformlinge, welche auf die Anlageflächen 676 aufgesetzt wurden, angesaugt werden. Zudem wird beim Heißpressen austretende Feuchtigkeit aus den Vorformlingen über die ersten Öffnungen 678 in den ersten Anlageflächen 676 angesaugt und über die Kanäle im ersten Werkzeugkörper 642 abgeführt. Somit kann der Feuchtigkeitsgehalt der Vorformlinge reduziert und die freiwerdende Feuchtigkeit abgeführt werden.

In Fig. 4 sind weitere Temperatursensoren für die mittlere Formeinrichtung 670 gezeigt. Die Temperatursensoren können bei allen Formeinrichtungen 670 vorgesehen sein. Darüber hinaus können an den entsprechenden Stellen umfangsseitig mehrerer solcher Sensoren angeordnet sein.

So weist die Formeinrichtung 670 bspw. einen zweiten Temperatursensor 681 am Randbereich des zu fertigenden Produkts auf. Zusätzlich weist die Formeinrichtung 670 einen dritten Temperatursensor 682 an einem Bodenbereich des zu fertigenden Produkts auf.

Die Temperatursensoren 681, 682 können bspw. direkt an der Oberfläche der Anlageflächen 676 angeordnet sein. In weiteren Ausführungen können die Temperatursensoren 681, 682 unterhalb der Oberfläche der Anlageflächen 676 angeordnet sein. Bspw. befinden sich die Temperatursensoren 681, 682 in einem Abstand von 0,5 bis 5 mm unterhalb der Oberflächen, so dass zum einen die Temperatursensoren 681, 682 keinen Einfluss auf die Formgebung und den Heißpressvorgang durch ihre Anwesenheit haben und zum anderen dennoch eine relativ genaue Erfassung der Temperatur ermöglichen.

In weiteren Ausführungen kann eine Messspitze eines Temperatursensors 681, 682 in einer Öffnung in den Anlageflächen 676 aufgenommen sein, wobei eine solche Öffnung von der Gestalt und dem Durchmesser im Wesentlichen den ersten Öffnungen 678 entspricht. Bei solchen Ausführungen ist es wichtig, dass über diese Öffnung mit der darin eingesetzten Messspitze kein Ansaugen von Feuchtigkeit erfolgt und auch keine fluidische Verbindung mit den ersten Öffnungen 678 zum Absaugen besteht, damit es durch den abgesaugten Strom an Wasserdampf und dem mitangesaugten Nebenstrom an Gas oder Gasgemisch kein Kühlen der Messspitze bzw. des jeweiligen Temperatursensors erfolgt.

In weiteren Ausführungen, wobei die Temperatursensoren 681, 682 nicht direkt an der Oberfläche der Anlageflächen 676 angeordnet sind, erfolgt vor der Verwendung der Temperatursensoren 680, 681, 682 im regulären Betrieb ein Messen der Temperaturen unterhalb der Oberfläche der Anlageflächen 676 durch die Temperatursensoren 680, 681, 682 und ein Messen der Oberflächentemperatur der Anlageflächen 676 durch weitere, nicht stationäre Messeinrichtungen. Anschließend wird die Differenz ermittelt, wobei zur Bestimmung der an der Oberfläche vorherrschenden Temperatur die durch feuchte Vorformlinge erbrachte Kühlleistung etc. berücksichtigt wird. Die unterhalb der Oberfläche der Anlageflächen 676 durch die Temperatursensoren 680, 681, 682 erfassten Temperaturen werden dann als Referenzwerte für die tatsächlich an den Oberflächen vorherrschenden Temperaturen in einem Speicher hinterlegt, auf den die Steuereinheit 310 im Betrieb der Faserformanlage 1000 zur Steuerung und Regelung ihrer Einheiten und Stationen zugreift. Somit kann durch Erfassen von Referenzwerten für Oberflächentemperaturen der Betrieb der Formstation 600 erfolgen, ohne dass direkt an der Oberfläche der Anlageflächen 676 etc. Temperatursensoren angeordnet sein müssen. Hiermit können deutlich einfachere Temperatursensoren verwendet werden und der Aufwand zum Einbau der Temperatursensoren 680, 681, 682 ist gegenüber direkt an der Oberfläche angeordneten Temperatursensoren 680, 681, 682 reduziert. Bspw. können Temperatursensoren 680, 681, 682 in Bohrungen in den ersten Formeinrichtungen 670 eingesetzt werden. Diese Bohrungen können nach dem Einsetzen der Temperatursensoren 680, 681, 682 mit einem (hoch)temperaturbeständigen Werkstoff mit schlechten Wärmeleiteigenschaften verschlossen werden.

In Ausführungen mit direkt an der Oberfläche der ersten Werkzeugkomponente 640 angeordneten Temperatursensoren 680, 681, 682 können die ersten Formeinrichtungen 670 zusätzlich eine (hoch)temperaturbeständige Beschichtung aufweisen, die sich mindestens über die gesamte Kontaktfläche (erste Anlageflächen 676) zumindest der ersten Formeinrichtungen 670 erstreckt.

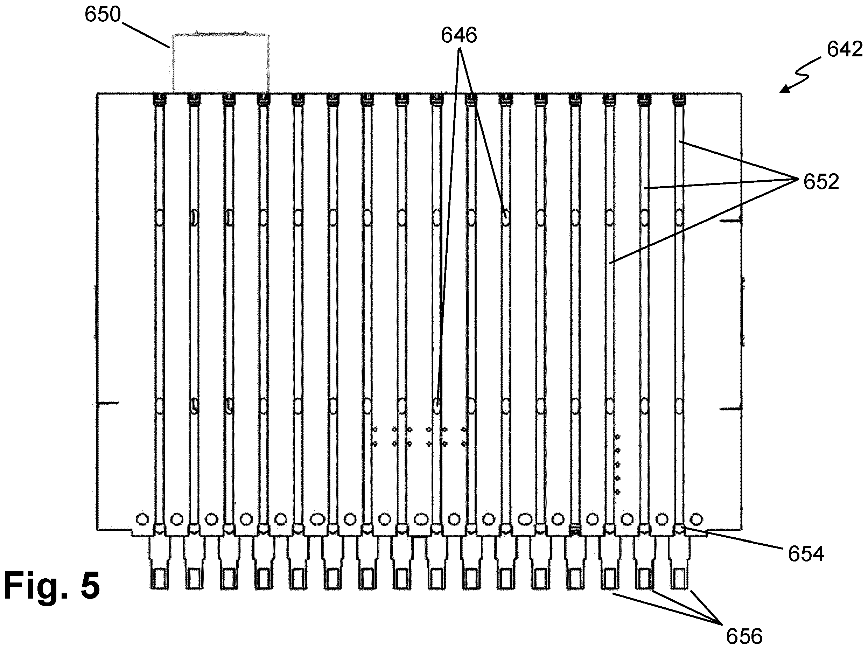

Fig. 5 zeigt eine zweite schematische Schnittansicht der ersten Werkzeugkomponente 640 von Fig. 3, wobei die Schnittebene durch die zweiten Kanäle 652 verläuft. Die Darstellung zeigt, dass in dieser Ausführung die zweiten Kanäle 652 parallel zueinander und orthogonal zu den ersten Kanälen 646 verlaufen. Die zweiten Kanäle 652 weisen in dieser Ausführungsform jeweils zwei Verbindungsbereiche mit den ersten Kanälen 646 auf. In weiteren Ausführungen können die Anzahl der ersten Kanäle 646 und die Verbindungsbereiche größer als zwei sein. In noch weiteren Ausführungen kann auch nur ein erster Kanal 646 und damit ein Verbindungsbereich pro zweitem Kanal 652 vorgesehen sein. In weiteren Ausführungen können ein oder mehrere erste Kanäle 646 und ein oder mehrere zweite Kanäle 652 nicht orthogonal, sondern in anderen Ausrichtungen zueinander verlaufen. In noch weiteren Ausführungen können erste Kanäle 646 und zweite Kanäle 652 miteinander "verflochten" sein, wobei die Kanäle 646 und 652 sich abwechselnd in zueinander parallel zur Platte 644 verlaufenden Ebenen befinden.

Die Ausbildung, insbesondere die Anzahl und Ausrichtung der Kanäle 646, 652 erfolgt nach Maßgabe des Volumens an Wasserdampf, welcher bei einem Heißpressvorgang in einer definierbaren Zeiteinheit abgeführt werden muss. Hierzu erfolgt die Auslegung der Werkzeugkomponenten 640, 690 nach Maßgabe einer maximalen Belegung der zur Verfügung stehenden Fläche der Platte 644 für Formeinrichtungen. Bspw. können einzelne Kanäle von den ersten Formeinrichtungen 670 einen kleineren Durchmesser aufweisen als ein gemeinsamer Kanalabschnitt kurz vor der Verbindungseinheit 650, weil das pro Zeiteinheit abgeführte Volumen an Wasserdampf größer ist als in den einzelnen Kanälen von den ersten Formeinrichtungen 670. Zumindest ein gemeinsamer Kanal kann hierbei einen sich kontinuierlich oder abschnittsweise vergrößernden Durchmesser aufweisen. Darüber hinaus können in weiteren Ausführungen Kanäle entsprechende Radien und Rundungen aufweisen, die ein strömungsgünstiges Abführen von Wasserdampf ermöglichen.

Bei der in den Fig. 3 bis 5 gezeigten Ausführung eines Werkzeugkörpers 642 weisen die ersten Kanäle 646 größere Durchmesser auf wie die zweiten Kanäle 652, wobei insbesondere die Durchmesser der zweiten Kanäle 652 nach Maßgabe der benötigten Querschnitte zum Verhindern kurzfristiger Blockaden in den ersten Kanälen 646 bei einem großen, lokal auftretenden Dampfvolumen sind. Die Durchmesser der Kanäle 646, 652 weisen eine maximale Größe auf, damit es nicht zu einem Abkühlen des Werkzeugkörpers 642 durch angesaugtes Gasgemisch oder Gas kommt, deren Temperaturen (insbesondere beim Mitansaugen von Umgebungsluft) grundsätzlich geringer sind als die Temperatur des angesaugten Wasserdampfs und des Werkzeugkörpers 642.

Die zweite Werkzeugkomponente 690 weist in dem gezeigten Ausführungsbeispiel ebenfalls Heizpatronen zum Temperieren des zweiten Werkzeugkörpers 692 und der damit verbundenen zweiten Formeinrichtungen 694 auf. Der zweite Werkzeugkörper 692 weist auch Mittel zum Ansaugen auf, wobei hierüber in verschiedenen Ausführungen entweder kein Ansaugen von austretendem Wasserdampf beim Heißpressen der Vorformlinge oder ein Ansaugen von austretendem Wasserdampf analog zu den für die erste Werkzeugkomponente 640 beschriebenen Ausführungen und Verfahren erfolgt (zusätzliches Ansaugen von Umgebungsluft). Das Ansaugen über den zweiten Werkzeugkörper 692 und entsprechende Öffnungen in den zweiten Formeinrichtungen 694 kann in einer weiteren Ausführung in der Regel nach dem Heißpressen erfolgen, um die fertigen Produkte in den zweiten Formeinrichtungen 694 zu halten und nach dem Verfahren des zweiten Werkzeugkörpers 692 auf dem Transportband der Fördereinrichtung 800 abzulegen.

Der Aufbau des zweiten Werkzeugkörpers 692 kann sich dabei in der Regel vom Aufbau des ersten Werkzeugkörpers 642 nur unwesentlich unterscheiden. So weist der zweite Werkzeugkörper 692 entsprechende Mittel auf, um mit zweiten Formeinrichtungen 694 verbunden zu werden, die korrespondierend zu den ersten Formeinrichtungen 670 ausgebildet sind, um im verpressten Zustand zwischen den ersten Anlageflächen 676 der ersten Formeinrichtungen 670 und den zweiten Anlageflächen 696 der zweiten Formeinrichtungen 694 Kavitäten auszubilden. Die Kavitäten sind im verpressten Zustand des ersten Werkzeugkörpers 642 und des zweiten Werkzeugkörpers 692 geschlossen, so dass keine Pulpe oder Wasserdampf außer über die ersten Öffnungen 678 in den ersten Anlageflächen 676 entweichen kann. Ein Entweichen von Wasserdampf über zweite Öffnungen wird dadurch verhindert, dass aufgrund des Ansaugens über einen ersten Anschluss die Strömungsrichtung für den Wasserdampf vorgeben ist.

Die Ausbildung der ersten Formeinrichtungen 670 und die dazu komplementäre Ausbildung der zweiten Formeinrichtungen 694 kann in weiteren Ausführungen auch umgekehrt zu der in den Figuren gezeigten Ausführung erfolgen. Hierbei sind dann auch das Saugwerkzeug mit den Saugformen und die Vorpressstation 400 mit den Vorpressformen entsprechend anzupassen. Bei einem Umrüsten der Werkzeuge für andere Produkte müssen daher das Saugwerkzeug, das Vorpresswerkzeug als auch die ersten und zweiten Formeinrichtungen 670, 694 ausgewechselt werden.

In weiteren Ausführungen können erste und zweite Werkzeugkörper 642 und 692 integrierte Formeinrichtungen 670 und 694 aufweisen, die fest mit dem ersten Werkzeugkörper 642 bzw. dem zweiten Werkzeugkörper 692 verbunden und bspw. als integraler Bestandteil ausgebildet sind.

Wie eingangs bereits ausgeführt, gestaltet sich der Heißpressprozess bei der Herstellung von Produkten aus faserhaltigem Material, insbesondere bei relativ hohem Feuchtigkeitsgehalt der heißzupressenden Vorformlinge, als schwierig, weil es zu unterschiedlichen Temperaturniveaus in den zwischen den ersten Anlageflächen 676 und den zweiten Anlageflächen 696 gebildeten Kavitäten kommen kann. Außerdem können durch verschiedene Druckzustände auch ein "Verblocken" und weitere, eingangs genannte Probleme auftreten.

Die hierin beschriebene Ausgestaltung des ersten Werkzeugkörpers 642 mit mindestens einem zusätzlichen zweiten Kanal 652 bzw. mit mindestens einer zweiten Öffnung, über welche ein Gasgemisch oder ein Gas beim Absaugen des entstehenden Wasserdampfs während des Heißpressens mitangesaugt werden, bietet eine weitere Möglichkeit, die eingangs genannten Probleme zu beheben, weil sich die Temperaturen in den Kavitäten angleichen und ausreichend Volumen zum Abführen des entstehenden Wasserdampfs auch bei kurzfristig auftretenden, lokalen Spitzen von entstehenden Wasserdampf zur Verfügung steht.

Durch ein schrittweises, an die jeweiligen Feuchtigkeitsgehalte der Vorformlinge angepasstes Schließen der Heißpresseinrichtung 610, wobei die zweite Werkzeugkomponente 690 über die Kniehebelpresse 630 oder eine andere Presseinrichtung unter Kraft gegen die erste Werkzeugkomponente 640 gedrückt wird, kann in weiteren Ausführungen gezielt so viel überschüssiges Wasser aus den Vorformlingen austreten, wie effektiv an den erwärmten Anlageflächen 676 der ersten Formeinrichtungen 670 und den Anlageflächen 696 der zweiten Formeinrichtungen 694 verdampfen. Dieser Prozess kann durch ein Überwachen der Oberflächentemperatur an den Anlageflächen 676 und/oder 696 bzw. von Referenzwerten für die Oberflächentemperaturen erfolgen. Damit wird ein kritisches Abfallen der Oberflächentemperatur an den Anlageflächen 676 und 696 verhindert. Hierzu kann die Schließbewegung und insbesondere die Schließgeschwindigkeit, d.h. die Geschwindigkeit, mit welcher die zweite Werkzeugkomponente 690 zur ersten Werkzeugkomponente 640 verfahren wird, schrittweise angepasst werden. Anstelle einer Kniehebelpresse 630 kann daher auch eine lineare Presseinrichtung vorgesehen sein, die ein exaktes, schrittweises Verfahren der zweiten Werkzeugkomponente 690 ermöglicht. Das Schließen und die Schließgeschwindigkeit werden durch die Steuereinheit 310 geregelt.

Der Heißpressprozess erfolgt nach Maßgabe der Zusammensetzung der Pulpe und dem Feuchtigkeitsgehalt eines Vorformlings, der durch einen Filterkuchen aus Fasermaterial gebildet ist. Für den hierin beschriebenen Heißpressvorgang ist die Restfeuchte nach einem Vorpressvorgang maßgeblich. Die Restfeuchte kann bei vorgeschalteten Prozessschritten mit bspw. Druckluft beaufschlagten Silikon-Vorpresskörpern im Bereich von 50-70 Gew.-% liegen. Vorzugsweise wird versucht, durch einen Vorpressvorgang den Feuchtigkeitsgehalt so gering wie möglich zu halten. Beim Vorpressen wird in der Regel Feuchtigkeit (Wasser) nur mechanisch aus den angesaugten Vorformlingen gepresst. Es findet dabei somit kein Verdampfen statt.

Die gespeicherte Feuchtigkeit in Vorformlingen liegt zum einen zwischen den Fasern und zum anderen als in den Fasern gebundenes Wasser vor. Ersteres lässt sich mechanisch aus dem Fasergeflecht herauspressen, wohingegen in den Fasern gebundenes Wasser verdampfen bzw. verdunsten muss.

Bei einer bekannten Zusammensetzung der Pulpe können durch Vorgabe der Ansaugzeit im Pulpebecken, dem Druck beim Vorpressen und der Vorpressdauer definierte Restfeuchtegehalte in den Vorformlingen erreicht werden. Ein Restfeuchtegehalt kann auch für eine bestimmbare Anzahl an Vorformlingen bei definierten Parametern ermittelt werden. Vorformlinge mit definierter Restfeuchte werden dann bspw. auf eine untere Werkzeughälfte, erste Werkzeugkomponente 640, übergeben bzw. aufgelegt. Dabei sind für die Vorformlinge Größenunterschiede von Vorpress- und Heißpresswerkzeugkomponenten aufgrund unterschiedlicher Wärmeausdehnungen zu berücksichtigen.

Während der Übergabe und des Transports in die Heißpresseinrichtung 610 wird der Vorformling über die ersten Öffnungen 678 aktiv angesaugt und in Position gehalten. Anschließend schließen die erste Werkzeugkomponente 640 und die zweite Werkzeugkomponente 690 auf eine Halteposition knapp über dem Berührpunkt von zweiten Formeinrichtungen 694 und Vorformling. Um ein fehlerhaftes Ankleben an den Anlageflächen 696 zu vermeiden kann dort kurze Zeit verweilt bzw. ab dieser Umschaltposition die Schließgeschwindigkeit verringert werden. Während des linearen Schließvorgangs steigt - bedingt durch die Zustellung der ersten Werkzeugkomponente 640 und der zweiten Werkzeugkomponente 690 und des zwischenliegenden Vorformlings - die Schließkraft an. Zwischen Faserpaketen liegendes Wasser wird dadurch mechanisch ausgepresst und verdampft auf den heißen Oberflächen der Anlageflächen 676, 696 der Kavität. Je nach Topologie des Produkts und nach Maßgabe des Restfeuchtegehalts nach einem Vorpressen entstehen im Verlauf des Schließens variable Wassermengen.

Da verdampfendes überschüssiges Wasser der Oberfläche der Anlageflächen 676, 696 zyklisch thermische Energie entzieht, kommt es daher zu einem starken Absinken der Oberflächentemperatur der Kavitäten, während überschüssiges Wasser durch den Energieeintrag ab Siedetemperatur in Wasserdampf übergeht. Die beiden Werkzeugkomponenten 640, 690 mit den Formeinrichtungen 670, 694 bilden im Prozess einen quasi abgeschlossenen Raum, in dem der entstehende Dampf über die Öffnungen 678 und die Kanäle 646, 652 in den Werkzeugkörpern 642, 692 kanalisiert abgeführt wird.

Mithilfe einer kontrollierten Durchlüftung der Werkzeugkörper 642, 692 anstatt reiner Dampfabsaugung sowie in weiteren Ausführungen in Kombination mit geregelter Schließgeschwindigkeit zur kontrollierten Dampfentstehung tritt kein Verblocken auf, so dass ein Heißpressprozess in sich stabiler und ausgeglichener ablaufen kann.

Zur Erreichung der physikalischen Grenzen des Heißpressprozesses, um dadurch die schnellstmögliche Zykluszeit zu erreichen, muss die maximal mögliche thermische Energieausbeute sichergestellt werden. Dabei verläuft ein Zyklus dann optimal, wenn die direkte Oberflächentemperatur der Anlageflächen 676, 696 der Kavitäten auf die charakteristische Siedetemperatur der in dem Vorformling enthaltenen Flüssigkeit abfällt. Im Falle einer Durchlüftung mit Umgebungsluft beträgt die Siedetemperatut 100°C bei Umgebungsdruck ohne wesentlichen Druckanstieg in den Komponenten der Heißpresseinrichtung 610. Durch ein angepasstes Schließen der Heißpresseinrichtung 610 wird sichergestellt, dass nur so viel Wasser aus den Vorformlingen ausgebracht wird, wie an den Anlageflächen 676, 696 verdampfen kann, ohne dass die Oberflächentemperatur unter die Siedetemperatur der ausgebrachten Flüssigkeit fällt. Damit wird verhindert, dass überschüssiges Wasser die Oberflächentemperatur auf unter Siedetemperatur abkühlt, was dazu führen würde, dass so lange kein Dampf entsteht, bis die in den Formeinrichtungen 670, 694 bzw. den Werkzeugkörpern 642, 692 gespeicherte Energie wieder durchschlägt und somit das Wasser wieder verdampfen kann. In solchen Fällen würde Zykluszeit verloren gehen, solange die Oberflächentemperatur auf unter Siedetemperatur abgesunken ist. Durch eine Regelung der Schließbewegung nach Maßgabe der Oberflächentemperatur der Anlageflächen 676, 696 kann dies verhindert werden.

Es lassen sich ferner charakteristische Schließgeschwindigkeiten definieren, die sowohl der Dampfentstehung als auch der optimalen Energieausbeute angepasst sind. Die Dimension der wassermengenabhängigen relativen Schließgeschwindigkeit kann [mm/(s ml)] betragen und sich im e-3 Bereich bewegen (z. B. 2^{∗}10⁻³ [mm / s ml]). Die max. mögliche absolute Schließgeschwindigkeit ist abhängig vom Material und der Topologie des Vorformlings, wobei große Flächen, an welchen in kurzer Zeit viel Wasser austritt bzgl. der absoluten Schließgeschwindigkeit langsamer überfahren werden als schräge Flächen. Im Ausführungsbeispiel von Fig. 7 bedeutet das, dass die Schließgeschwindigkeit im Bereich des Bodens 3010 langsamer ist als im Bereich der Seitenwand 3020, da dort pro Wegstrecke (Hub) der Heißpresseinrichtung 610 weniger Wasser aus dem Material des Vorformlings austritt.

Bei der gezeigten Heißpresseinrichtung 610 kann das Schließen nach Maßgabe des austretenden Wassers angepasst an die Oberflächentemperatur der Anlageflächen 676 erfolgen. Zu Beginn eines Heißpressprozesses müssen hierzu die Anlageflächen 676, 696 die gewünschte Temperatur aufweisen, die in der Regel deutlich höher ist, wie die Siedetemperatur der austretenden Flüssigkeit bzw. des Wassers. In dem Ausführungsbeispiel können die Anlageflächen 676, 696 auf bis zu 280 °C aufgeheizt werden. Damit kann beim Schließen der Heißpresseinrichtung 610 gleich ein Verdampfen der in den Vorformlingen enthaltenen Flüssigkeit erfolgen, weil die Oberflächentemperatur der Anlageflächen 676 sowie Anlageflächen 696 in der Kavität ausreichend heiß ist. Die Schließgeschwindigkeit orientiert sich am oberflächennahen Energiegehalt der Anlageflächen 676, 696 der Kavitäten. Für die Bestimmung der Siedetemperatur können bekannte Werte herangezogen oder die Pulpe permanent oder in festlegbaren Abständen hinsichtlich ihrer Zusammensetzung überwacht werden, so dass hierüber die Siedetemperatur ermitteln lässt. Die Steuerung in der Steuereinheit 310 erhält somit die Siedetemperatur der Flüssigkeit und regelt das Schließen der Heißpresseinrichtung 610 nach Maßgabe der gemessenen Oberflächentemperatur der Anlageflächen 676, 696. Erst wenn die Anlageflächen 676, 696 in einem tolerierbaren Temperaturbereich liegen, kann ein Heißpressvorgang durch eine relative Verlagerung der ersten Werkzeugkomponente 640 und der zweiten Werkzeugkomponente 690 durchgeführt werden.

Bei einem Heißpressvorgang beginnt nach einem in Kontaktkommen der zweiten Anlageflächen 696 mit einem auf die ersten Anlageflächen 676 aufgesetzten Vorformling bei weiterer Verlagerung das Auspressen und Verdampfen von Wasser, insbesondere des in den Fasern gebundenen Wassers. Um das austretende Wasser zu verdampfen ist eine entsprechend hohe Temperatur mindestens der Anlageflächen 676 erforderlich. Die erforderliche Temperatur muss dabei mindestens so hoch sein wie die Siedetemperatur der Flüssigkeit.

Ein stufenweises Schließen der Heißpresseinrichtung 610 mit Haltepunkten für definierbare Haltezeiten kann permanent durch die Steuereinheit 310 vorgegeben werden. Hierzu wird zumindest die Oberflächentemperatur an den Anlageflächen 676 überwacht, welche maßgeblich dafür ist, ob ein Verdampfen der Flüssigkeit erfolgen kann. Bricht bspw. die Oberflächentemperatur an den Anlageflächen 676 stark ein, so muss die Schließgeschwindigkeit entweder gedrosselt oder kurzzeitig gestoppt werden, bis ein Anstieg der Oberflächentemperatur erfasst oder kein weiteres Abfallen mehr detektiert wird.

Selbstverständlich kann ein solches Verfahren vorab für bestimmte Produkttypen ermittelt werden. Die aus einem oder mehreren Testläufen ermittelten Werte werden dann für die Steuerung des Heißpressverfahrens in einem Speicher hinterlegt, auf den die Steuereinheit 310 zur Ansteuerung der Heißpresseinrichtung 610 zurückgreift. Dabei kann über Temperatursensoren eine Überwachung vorgenommen werden. Wird ein zu starkes Abweichen von erwarteten Sollwerten festgestellt, kann die Steuereinheit 310 bspw. die Zykluszeit oder Haltezeiten verlängern.

In weiteren Ausführungen wird beim Schließen der Heißpresseinrichtung 610 ein linearer Hub der zweiten Werkzeugkomponente 690 bevorzugt, wobei die Verlagerung der zweiten Werkzeugkomponente 690 direkt angesteuert werden kann. Dies bietet gegenüber einem Antrieb über eine Kurvenscheibe etc. Vorteile hinsichtlich des Erreichens von Haltepunkten und der Bereitstellung der Schließkraft.

Der Temperatureinbruch in den Kavitäten bleibt bei gleichen Einstellungen relativ zur Ausgangstemperatur gleich, was bedeutet, dass je höher die Ausgangstemperatur ist, desto schneller kann die Heißpresseinrichtung 610 geschlossen werden bzw. desto mehr überschüssiges Wasser kann im Schließvorgang verdampfen.

Die Oberflächentemperatur der Kavitäten ist im Wesentlich von der Wärmenachfuhr über die Heizpatronen 660 unabhängig, wobei das zyklische Rückerwärmen von der Kapazität der jeweiligen Kavität gespeist wird. Die Zykluszeit, also die Zeit, die für ein Heißpressen von Vorformlingen zur Erzeugung von fertigen Produkten erforderlich ist, ist somit primär von der Leitfähigkeit, der Form und der thermischen Kapazität der Kavität abhängig, so dass über eine Regelung der Heizpatronen 660 im Wesentlichen kein Einfluss auf die Zykluszeit genommen werden kann.

Aus diesem Grund wird neben der Bereitstellung von Gas oder Gasgemisch (bspw. Umgebungsluft) für das Absaugen von freiwerdendem Wasserdampf und zur Angleichung der Temperaturen und Drücke in den Kavitäten auch das Schließen der Kavitäten von der vorherrschenden Temperatur an den Oberflächen der ersten Anlageflächen 676 und der zweiten Anlageflächen 696 abhängig gemacht. Hierbei wird die Siedetemperatur der Pulpe bzw. der zu verdampfenden Flüssigkeit berücksichtigt. In der Regel entsteht beim Heißpressen Wasserdampf in den Kavitäten. Durch das Ansaugen eines Nebenstroms an Gasgemisch oder Gas beim Heißpressen kann in weiteren Ausführungen die Temperatur in den Kavitäten bei allen Kavitäten auf ein im Wesentlichen gleiches Temperaturniveau angeglichen werden. Des Weiteren wird über das Ansaugen von Gasgemisch oder Gas eine Druckangleichung in den Kanälen und auch in den Kavitäten erreicht, was schließlich zu dem Erreichen eines im Wesentlichen einheitlichen Temperaturniveaus in allen Kavitäten führt.

Schließlich kann das Schließen der Heißpresseinrichtung 610 nach Maßgabe der Oberflächentemperatur an den Anlageflächen 676 und 696 erfolgen, wobei die Siedetemperatur der Flüssigkeit, die in den Vorformlingen enthalten ist und durch den Heißpressvorgang durch Verdampfen entweichen soll, maßgeblich für die Schließgeschwindigkeit ist. Zusätzlich können die jeweils vorherrschenden Drücke innerhalb der Kavitäten in weiteren Ausführungen berücksichtigt werden. Bei Ausführungen mit einer Verbindung zur Umgebung zum Ansaugen von Umgebungsluft liegen die Siedetemperaturen bei einem Druck von ca. 1bar bei ca. 100 °C. In Ausführungsformen ohne eine solche Umgebungsluftansaugung kann bspw. während des Heißpressens ein größerer Unterdruck (bspw. 0,5 bis 0,9 bar) in den Kavitäten vorherrschen, so dass bei geringeren Oberflächentemperaturen an den Anlageflächen 676 und 696 ein Verdampfen der durch das Verpressen freiwerdenden Flüssigkeit an den heißen Oberflächen erfolgen kann.

In weiteren Ausführungen erfolgt das Schließen der Heißpresseinrichtung 610 durch relative Verlagerung der ersten Werkzeugkomponente 640 und der zweiten Werkzeugkomponente 690 nicht kontinuierlich, sondern stufenweise, wobei mindestens ein Haltepunkt vorgesehen ist, an dem nach dem Auspressen von Flüssigkeit aus den Vorformlingen ein Verdampfen der Flüssigkeit an den heißen Oberflächen der Anlageflächen 676 und 696 erfolgt. Hierbei kommt es zu einem Abkühlen der Oberflächen der Anlageflächen 676 und 696. Während des Verweilens der zweiten Werkzeugkomponente 690 im Haltepunkt wird zum einen erreicht, dass das austretende Wasser ausreichend Zeit zum Verdampfen hat, ohne dass es zu einem Verblocken innerhalb der Kavität durch ein zu schnelles Zufahren kommt, und zum anderen, dass die Oberflächen der Anlageflächen 676 und 696 aufgrund der Wärmekapazität der Formeinrichtungen zumindest teilweise zurückerwärmt werden können.

Es können in weiteren Ausführungen mehrere Haltepunkte definiert werden. Es können die Schließgeschwindigkeit sowie die Dauer und Anzahl der Haltepunkte auch während eines Heißpressvorgangs nach Maßgabe von erfassten Werten (z.B. Temperatur etc.) angepasst und verändert werden.

In weiteren Ausführungen kann auf ein permanentes Messen der Temperatur an den Anlageflächen 676 und/oder 696 verzichtet werden, wobei bspw. vorab ermittelte Zykluszeiten sowie Haltepunkte und Schließgeschwindigkeiten beim Heißpressen zum Einsatz kommen. Da die Oberflächentemperatur an den Anlageflächen 676 und 696 von der Wärmespeicherfähigkeit des verwendeten Materials und das Rückerwärmen hauptsächlich davon abhängt, kann eine Zykluszeit nach Maßgabe von bspw. Pausen zwischen zwei aufeinanderfolgenden Heißpressvorgängen reduziert werden. Die Reduzierung der Zykluszeit hängt dabei von der Zeitspanne zwischen zwei aufeinanderfolgenden Heißpressvorgängen ab.

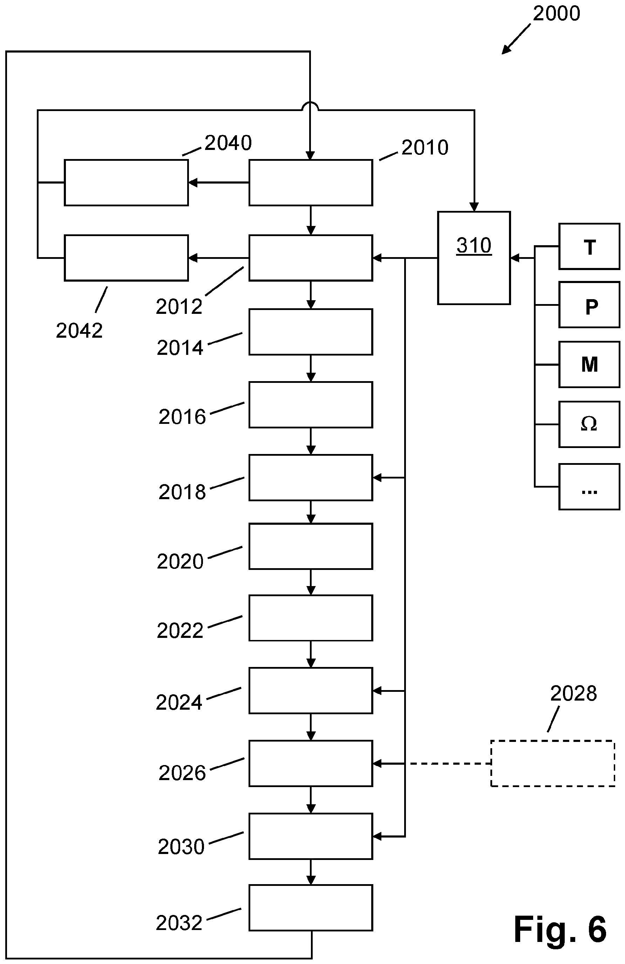

Fig. 6 zeigt ein Verfahren 2000 zur Herstellung von Produkten aus einem Fasermaterial unter Verwendung der vorstehend beschriebenen Komponenten sowie einer Faserformanlage 1000. Bei dem Verfahren 2000 können in weiteren Ausführungen einzelne Schritte ausgelassen oder in einer anderen Abfolge durchgeführt werden, sofern das Erreichen der hierin beschrieben Ziele und Vorteile weiterhin sichergestellt wird.

In einem ersten Verfahrensschritt 2010 erfolgt über ein Pulpebecken 200 der Faserformanlage 1000 oder eine separate Faseraufbereitungsanlage die Bereitstellung von Pulpe mit einem Faseranteil von 0,5 bis 10 Gew.-% in einer wässrigen Lösung. Die Pulpe befindet sich entweder bereits in dem Pulpebecken 200 oder wird der Faserformanlage 1000 über entsprechende Schnittstellen und Leitungen dem Pulpebecken 200 zugeführt. Hierzu kann die Steuereinheit 310 nach Maßgabe des Füllstands des Pulpebeckens 200 die Zufuhr von Pulpe von einer entfernten Faseraufbereitungsanlage regeln.

In einem Verfahrensschritt 2040 kann über eine entsprechende Sensorik kontinuierlich oder in festlegbaren Zeitintervallen die Zusammensetzung der Pulpe überwacht und hieraus die Siedetemperatur der Pulpe bestimmt werden. Diese Informationen werden der Steuereinheit 310 übermittelt, welche die Informationen in einen Speicher hinterlegt und/oder zur Regelung der Schließgeschwindigkeit der Heißpresseinrichtung 610 und zur Bestimmung der Anzahl und Zeitdauer von Haltepunkten beim Zufahren der Heißpresseinrichtung 610 verwendet. Die gewonnenen Informationen können auch zur Bestimmung eines Restfeuchtegehalts in verschiedenen Verfahrensständen herangezogen werden.

In einem Verfahrensschritt 2012 erfolgt ein Aufheizen des Heißpresswerkzeugs, wobei sowohl der erste Werkzeugkörper 642 und die daran angeordneten Formeinrichtungen 670 als auch der zweite Werkzeugkörper 692 und die daran angeordneten Formeinrichtungen 694 gleichmäßig über Temperiereinrichtungen, wie bspw. Heizpatronen 660, erwärmt werden.

In einem Verfahrensschritt 2042 können kontinuierlich oder in festlegbaren Abständen die Oberflächentemperaturen der Anlageflächen 676 und/oder 696 über Temperatursensoren 680, 681, 682 gemessen oder Referenzwerte gemessen oder die Oberflächentemperaturen nach Maßgabe vorab erfasster Temperaturverläufe beim Heißpressen über die Steuereinheit 310 bestimmt werden.

In einem Verfahrensschritt 2014 erfolgt ein Eintauchen des Saugwerkzeugs in die Pulpe nach Maßgabe der zu fertigenden Produkte.

In einem Verfahrensschritt 2016 erfolgt dann ein Ansaugen von Fasermaterial aus der Pulpe über die Ansaugeinrichtung 320, welche von der Steuereinheit 310 entsprechend geregelt wird. Zusätzlich können Ventile in mindestens einer Versorgungsleitung zwischen der Ansaugeinrichtung 320 und den Saugformen des Saugwerkzeugs über die Steuereinheit 310 geregelt werden.

In einem Verfahrensschritt 2018 erfolgt dann nach dem Ansaugen von Fasern und der Bewegung des Saugwerkzeugs zu der Vorpressstation 400 ein Vorpressen des Fasermaterials in den Saugformen und den Vorpressformen.

Anschließend erfolgt in einem Verfahrensschritt 2020 ein Einbringen der vorgepressten Vorformlinge über den Roboter 500 zu den ersten Formeinrichtungen 670, die auf dem ersten Werkzeugkörper 642 angeordnet sind, wobei hierzu der erste Werkzeugkörper 642 in der vorstehend beschriebenen Weise aus der Formstation 600 herausgefahren wurde. Die vorgepressten Vorformlinge werden dann auf die ersten Formeinrichtungen 670 aufgesetzt, wobei nach dem Aufsetzen ein Unterdruck zum Halten der Vorformlinge unterbrochen wird. Die Vorformlinge kommen damit auf den ersten Anlageflächen 676 der ersten Formeinrichtungen 670 in Anlage. Danach wird der erste Werkzeugkörper 642 mitsamt den auf den ersten Formeinrichtungen 670 aufgesetzten Vorformlingen zurück in die Formstation 600 gefahren.

In einem Verfahrensschritt 2022 erfolgt dann ein Schließen der Heißpresseinrichtung 610 nach Maßgabe von erfassten Referenzwerten, gemessenen Temperaturen und/oder vorab bestimmten Zeiten und Haltepunkten, wobei das Schließen der Heißpresseinrichtung 610 nach Maßgabe der Siedetemperatur der in den Vorformlingen enthaltenen Flüssigkeit an die Oberflächentemperatur der Anlageflächen 676, 696 angepasst wird.

In einem Verfahrensschritt 2024 erfolgt über die Absaugeinrichtung 320 ein Absaugen von austretender Flüssigkeit und/oder von Wasserdampf, der durch Verdampfen der austretenden Flüssigkeit an den heißen Anlageflächen 676 und 696 entsteht, über die ersten Öffnungen 678, die zweiten Kanäle 652 und die ersten Kanäle 646. Das Absaugen erfolgt während des Verpressens durch gesteuerte Verlagerung der zweiten Werkzeugkomponente 690 in der vorstehend beschriebenen Weise.

In einem Verfahrensschritt 2026 erfolgt während des Absaugens von Wasserdampf ein Ansaugen eines Gasgemischs oder eines Gases (bspw. Umgebungsluft) über zweite Öffnungen, bspw. zweite Kanäle 652, so dass es aufgrund des Druckausgleichs in den Kanälen und den Kavitäten zu einem Angleichen der Temperaturen in den Kavitäten kommt.

In weiteren Ausführungen kann in einem Verfahrensschritt 2028 eine Regelung der Öffnung von Ventilen 656 bei den zweiten Kanälen 652 erfolgen, wobei nach Maßgabe von erfassten Temperaturen die Ventile 656 die Menge an zugeführtem bzw. angesaugtem Gasgemisch oder Gas regeln, damit es zu einem Druckausgleich und zu einer Temperaturangleichung in den Kavitäten kommt.

Alternativ kann durch Bereitstellung eines Nebenstroms mit höherem Druck über die zweiten Öffnungen ein "Ausblasen" des Wasserdampfs erfolgen, wobei der Wasserdampf mitgerissen wird.

In einem Verfahrensschritt 2030 erfolgt nach dem Heißpressen der Vorformlinge, die dann als fertige Produkte vorliegen und einen Feuchtigkeitsgehalt von bspw. 5 Gew.-% aufweisen, ein Öffnen des Heißpresswerkzeugs durch relatives Verlagern der zweiten Werkzeugkomponente 690 von der ersten Werkzeugkomponente 640. Zudem erfolgt nach dem Öffnen eine Verlagerung des zweiten Werkzeugkörpers 692 über ein Schienensystem und einen zugehörigen Antrieb in der vorstehend beschriebenen Weise, wobei die fertigen Produkte in dem oberen Werkzeug verbleiben.

Nach dem Verfahren des oberen Werkzeugkörpers 692 werden die Produkte in einem Verfahrensschritt 2032 auf das Transportband der Fördereinrichtung 800 abgelegt, wobei hierzu der Unterdruck in den zweiten Formeinrichtungen 694 unterbrochen wird.

Der vorstehend beschriebene Prozess wird anschließend wieder durchlaufen, wobei während der kontinuierlichen Herstellung von Produkten aus Fasermaterial eine Herstellung derart erfolgt, dass gleichzeitig in jeder Station eine Bearbeitung erfolgen kann.

Wie in Fig. 6 angedeutet, kann die Steuereinheit 310 während der Herstellung von Produkten aus Fasermaterial bei den einzelnen Verfahrensschritten 2012, 2018, 2024, 2026 und 2030 nach Maßgabe der erfassten und/oder bestimmten Temperaturen, sowie vorherrschenden Drücken in den Kavitäten, den Kanälen und bspw. Versorgungsleitungen zu der Absaugeinrichtung 320, dem Gewicht von Vorformlingen und/oder der fertigen Produkte und/oder der elektrischen Leitfähigkeit der Vorformlinge und/oder der fertigen Produkte Rückschlüsse auf den jeweiligen Bearbeitungszustand ziehen und entsprechend die genannten Verfahrensschritte hinsichtlich Dauer, Geschwindigkeit und bspw. Temperatur beeinflussen und verändern, um möglichst kurze Zykluszeiten beim Heißpressen zu erhalten, ohne dass Ressourcen verschwendet werden und Vorformlinge und/oder Produkte beschädigt werden.

Die Fig. 7a, b zeigen verschiedene Darstellungen einer Schale 3000 als fertiges Produkt aus einem Fasermaterial, hergestellt nach einem hierin beschriebenen Herstellungsprozess. Eine solche Schale 3000 weist nach dem Heißpressen bspw. einen Restfeuchtegehalt von bspw. 1 bis 7 Gew.-% auf.

Fig. 7a zeigt eine perspektivische Darstellung der Schale 3000 und Fig. 7b zeigt eine Schnittansicht der Schale 3000. Die Schale 3000 weist einen Boden 3010 und eine sich vom Boden 3010 aus erstreckende umlaufende Seitenwand 3020 auf, die relativ steil vom Boden 3010 aus verläuft. Am oberen Ende der Seitenwand 3020 erstreckt sich ein umlaufender Rand 3030, der im Wesentlichen parallel zum Boden 3010 verläuft.

Die Wandstärke der Schale 3000 ist im gezeigten Ausführungsbeispiel im Boden 3010, in der Seitenwand 3020 und im Rand 3030 überall gleich groß. Die Wandstärke wird durch die Kavität vorgegeben, wenn die ersten Anlageflächen 676 und die zweiten Anlageflächen 696 während des Heißpressvorgangs den geringsten Abstand zueinander aufweisen.

### Bezugszeichenliste

- 100: Rahmen
- 200: Pulpebecken
- 300: Versorgungseinheiten
- 310: Steuereinheit
- 320: Absaugeinrichtung
- 400: Vorpressstation
- 500: Roboter
- 600: Formstation
- 602: Bewegungsrichtung
- 610: Heißpresseinrichtung
- 620: Untergestell
- 622: Werkzeugtisch
- 624: Schnittstelle
- 626: Führungsstange
- 628: oberer Werkzeugtisch
- 630: Kniehebelpresse
- 632: Tragjoch
- 640: erste Werkzeugkomponente
- 642: erster Werkzeugkörper
- 644: Platte
- 646: erster Kanal
- 648: Formkanal
- 650: Verbindungseinheit
- 652: zweiter Kanal
- 653: Kanalabschnitt
- 654: zweiter Anschluss
- 656: Ventil
- 658: Mulde
- 660: Heizpatrone
- 662: Schraube
- 670: Formeinrichtung
- 672: Sockel
- 674: Form
- 676: erste Anlagefläche
- 678: erste Öffnung
- 680: erster Temperatursensor
- 681: zweiter Temperatursensor
- 682: dritter Temperatursensor
- 690: zweite Werkzeugkomponente
- 692: zweiter Werkzeugkörper
- 694: zweite Formeinrichtung
- 696: zweite Anlagefläche
- 700: HMI-Panel
- 800: Fördereinrichtung
- 810: Kamera
- 900: Stapeleinrichtung
- 910: Greifer
- 1000: Faserformanlage
- 2000: Verfahren
- 2010: Verfahrensschritt
- 2012: Verfahrensschritt
- 2014: Verfahrensschritt
- 2016: Verfahrensschritt
- 2018: Verfahrensschritt
- 2020: Verfahrensschritt
- 2022: Verfahrensschritt
- 2024: Verfahrensschritt
- 2026: Verfahrensschritt
- 2028: Verfahrensschritt
- 2030: Verfahrensschritt
- 2032: Verfahrensschritt
- 2040: Verfahrensschritt
- 2042: Verfahrensschritt
- 3000: Schale
- 3010: Boden
- 3020: Seitenwand
- 3030: Rand

## Patentansprüche

1. Werkzeugkomponente für eine Heißpresseinrichtung (610), aufweisend einen ersten Werkzeugkörper (642), wobei der erste Werkzeugkörper (642) an mindestens einer Seite mindestens eine erste Formeinrichtung (670) aufweist, welche erste Anlageflächen (676) für einen aufzunehmenden Vorformling aufweist, wobei der erste Werkzeugkörper (642) aus einem thermisch leitenden Material besteht und erste Temperiermittel aufweist, die dazu ausgebildet sind, den ersten Werkzeugkörper (642) und die mindestens eine erste Formeinrichtung (670) zu temperieren, wobei die mindestens eine erste Formeinrichtung (670) an den ersten Anlageflächen (676) für einen aufzunehmenden Vorformling erste Öffnungen (678) aufweist, die in mindestens einen ersten Kanal (646) im ersten Werkzeugkörper (642) münden, wobei der mindestens eine erste Kanal (646) von den ersten Öffnungen (678) in mindestens einen ersten Anschluss mündet,
wobei mindestens eine zweite Öffnung vorgesehen ist, die eine fluidische Verbindung zu den ersten Öffnungen (678) der mindestens einen ersten Formeinrichtung (670) getrennt von dem mindestens einen ersten Anschluss bereitstellt.

2. Werkzeugkomponente nach Anspruch 1, wobei die mindestens eine zweite Öffnung im ersten Werkzeugkörper (642) und/oder an der mindestens einen ersten Formeinrichtung (670) vorgesehen ist.

3. Werkzeugkomponente nach Anspruch 1 oder 2, aufweisend mindestens einen zweiten Kanal (652), der mit dem mindestens einen ersten Kanal (646) und der mindestens einen zweiten Öffnung fluidisch verbunden ist.

4. Werkzeugkomponente nach einem der Ansprüche 1 bis 3, wobei die mindestens eine zweite Öffnung mit der Umgebung, einem Gasspeicher oder einer Einrichtung zur Bereitstellung von Gas oder einem Gasgemisch verbunden ist.

5. Werkzeugkomponente nach einem der Ansprüche 1 bis 4, aufweisend mindestens ein Regelelement zur Einstellung der Öffnungsweite der mindestens einen zweiten Öffnung.

6. Werkzeugkomponente nach Anspruch 5, wobei die mindestens eine zweite Öffnung und/oder der mindestens eine zweite Kanal (652) mindestens ein Ventil (656) aufweisen.

7. Werkzeugkomponente nach einem der Ansprüche 3 bis 6, aufweisend mehrere zweite Kanäle (652), die innerhalb des ersten Werkzeugkörpers (642) verlaufen.

8. Werkzeugkomponente nach Anspruch 7, wobei die zweiten Kanäle (652) parallel zueinander verlaufen.

9. Heißpresseinrichtung mit mindestens einer ersten Werkzeugkomponente (640) nach einem der Ansprüche 1 bis 8 und mindestens einer zweiten Werkzeugkomponente (690), wobei die zweite Werkzeugkomponente (690) einen zweiten Werkzeugkörper (692) aus einem thermisch leitenden Material und der zweite Werkzeugkörper (692) an mindestens einer Seite mindestens eine zweite Formeinrichtung (694) aufweist, die komplementär zu der mindestens einen ersten Formeinrichtung (670) ausgebildet ist und zweite Anlageflächen (696) für einen aufzunehmenden Vorformling aufweist, so dass zwischen den ersten Anlageflächen (676) der mindestens einen ersten Formeinrichtung (670) der ersten Werkzeugkomponente (640) und den zweiten Anlageflächen (696) der mindestens einen zweiten Formeinrichtung (694) der zweiten Werkzeugkomponente (690) jeweils eine Kavität für einen aufzunehmenden Vorformling gebildet ist, wenn die erste Werkzeugkomponente (640) und die zweite Werkzeugkomponente (690) zum Heißpressen von Vorformlingen gegeneinander verpresst sind.

10. Heißpresseinrichtung nach Anspruch 9, wobei die zweite Werkzeugkomponente (690) zweite Temperiermittel aufweist, die dazu ausgebildet sind, den zweiten Werkzeugkörper (692) und die mindestens eine zweite Formeinrichtung (694) zu temperieren.

11. Heißpresseinrichtung nach Anspruch 9 oder 10, wobei die mindestens eine zweite Formeinrichtung (694) an den zweiten Anlageflächen (696) für einen aufzunehmenden Vorformling dritte Öffnungen aufweist, die in mindestens einen dritten Kanal im zweiten Werkzeugkörper (692) münden, wobei der mindestens eine dritte Kanal von den dritten Öffnungen in mindestens einen dritten Anschluss mündet.

12. Heißpresseinrichtung nach einem der Ansprüche 9 bis 11, wobei mindestens eine zweite Öffnung in einem Kontaktbereich zwischen der mindestens einen ersten Formeinrichtung (670) und der mindestens einen zweiten Formeinrichtung (694) gebildet ist.

13. Verfahren zum Heißpressen von Vorformlingen aus einem faserhaltigen Material unter Verwendung einer Heißpresseinrichtung (610) nach einem der Ansprüche 9 bis 12, wobei eine erste Werkzeugkomponente (640) einen ersten Werkzeugkörper (642) und mindestens eine erste Formeinrichtung (670) und eine zweite Werkzeugkomponente (690) einen zweiten Werkzeugkörper (692) und mindestens eine komplementär zu der mindestens einen ersten Formeinrichtung (670) ausgebildete zweite Formeinrichtung (694) aufweist, aufweisend die folgenden Schritte:
- Bereitstellen mindestens eines Vorformlings aus faserhaltigem Material,
- Erwärmen mindestens des ersten Werkzeugkörpers (640) und der mindestens einen ersten Formeinrichtung (670) über mindestens ein erstes Temperiermittel,
- Aufsetzen des mindestens einen Vorformlings auf die ersten Anlageflächen (676) der mindestens einen ersten Formeinrichtung (670),
- Bewegen der zweiten Werkzeugkomponente (690) relativ zur ersten Werkzeugkomponente (640), wobei der mindestens eine Vorformling in Anlage mit den zweiten Anlageflächen (696) der mindestens einen zweiten Formeinrichtung (694) kommt,
- Verpressen der ersten Werkzeugkomponente (640) und der zweiten Werkzeugkomponente (690) bis die ersten Anlageflächen (676) und die zweiten Anlageflächen (696) mindestens eine geschlossene Kavität ausbilden,
wobei durch den über die ersten Temperiermittel erzeugten Wärmeeintrag und den durch Verpressen der ersten Werkzeugkomponente (640) und der zweiten Werkzeugkomponente (690) erzeugten Druck verdampfende Restfeuchtigkeit aus dem mindestens einen ersten Vorformling über mindestens die ersten Öffnungen (678), den mindestens einen ersten Kanal (646) und den ersten Anschluss abgeführt wird, wobei über mindestens eine zweite Öffnung, die eine fluidische Verbindung zu den ersten Öffnungen (678) der mindestens einen ersten Formeinrichtung (670) getrennt von dem mindestens einen ersten Anschluss bereitstellt, ein Einbringen eines Gas oder Gasgemischs mit einer gegenüber dem abgesaugten Wasserdampf unterschiedlichen Sättigung an Wasser während des Absaugens der verdampfenden Restfeuchtigkeit erfolgt.

14. Verfahren nach Anspruch 13, wobei das Gas oder Gasgemisch aus der Umgebung der mindestens einen Werkzeugkomponente (640) oder von einer Zuführeinrichtung bereitgestellt werden, wobei durch die Zuführeinrichtung die Temperatur und/oder der Druck des über die mindestens eine zweite Öffnung zugeführten Gas oder Gasgemisches mindestens in der mindestens einen Kavität eingestellt werden.

15. Verfahren nach Anspruch 13 oder 14, wobei
die verdampfende Restfeuchtigkeit über den mindestens einen ersten Anschluss mit einem absoluten Druck von 0,1 bis 0,9 bar angesaugt wird, und/oder
das Gas oder Gasgemisch über die mindestens eine zweite Öffnung mit einem absoluten Druck von 0,5 bis 1,5 bar zugeführt wird.
